Europäisches Patentamt

(19) European Patent Office

Office européen des brevets

(11) Publication number: **0 125 365**

**A1**

## (12) EUROPEAN PATENT APPLICATION

(21) Application number: **83306493.4**

(22) Date of filing: **25.10.83**

(51) Int. Cl.³: **F 16 H 3/62**

(30) Priority: **19.02.83 ES 519932**
**04.07.83 ES 523836**

(43) Date of publication of application:
**21.11.84 Bulletin 84/47**

(84) Designated Contracting States:
**AT BE CH DE FR GB IT LI LU NL SE**

(71) Applicant: **Parraga Garcia, Julián**
**Agustin Querol**
**8, Madrid(ES)**

(71) Applicant: **Parraga Gimeno, Julián**
**Agustin Querol, 8**
**Madrid - 7(ES)**

(72) Inventor: **Parraga Garcia, Julián**
**Agustin Querol**
**8, Madrid(ES)**

(72) Inventor: **Parraga Gimeno, Julián**
**Agustin Querol, 8**
**Madrid - 7(ES)**

(74) Representative: **Fisher, Bernard et al,**
**Raworth, Moss & Cook 36 Sydenham Road**
**Croydon Surrey CR0 2EF(GB)**

(54) Transmission for vehicles and industrial uses.

(57) A transmission comprising epicyclic gears having planets and cog wheels or crown gears and braking means. Each of the planets is multiple; that is, it is constituted by an $n$ number of cogwheels which have different pitch diameter values and are coaxial and turn-linked, the physical shaft of the planetary member mount (a member incorporating the multi-planet shafts $p$) being called principal shaft 2. Each of the cogwheels $n$ (sunwheels) meshes with a like wheel $p$ of the multiple planets, there is one, the principal wheel turn-linked and coaxial with a physical shaft, which is designated principal shaft 1. The remaining $n-1$ wheels being positioned coaxially with this shaft and with freedom of turn among themselves and with the principal shaft 1, known as auxiliary wheels. The braking means can be of known type such as multi-disc, ring-piston and hydraulic-drive and there are as many braking means as auxiliary wheels, that is $n-1$, and each when applied prevents a certain auxiliary wheel from turning, for which appropriate mechanical connections are provided which coaxially turn-link each auxiliary wheel with each turning disc or discs of each braking means, with which and owing to the independent action of each braking means as many transmission ratios are obtained (quotients between turning speeds) between the principal shafts 1 and 2 as there are braking means, or $n-1$.

FIG. I.

FIG. I'.

0125365

-1-

TITLE MODIFIED
see front page

TRANSMISSIONS FOR VEHICLES AND THEIR GEARING AND OF
APPLICATION IN INDUSTRY IN GENERAL

It appears necessary to define what the authors of this patent of invention application wish to express with the word TRANSMISSIONS. A vehicle's speed gear, gearbox, reduction gear, etc., are examples of transmissions. In general, the word embraces any mechanical group in which there is variation between the turning speed of one shaft (that of output) and the turning speed of another (that of input). This speed modification may affect only the direction of turn, the module maintaining that speed, or the rate of speed itself while maintaining the same direction of turn, or both parameters. A clear example, as mentioned, is the speed gear of a vehicle. According to the will of the driver in a manually-operated version, or automaticallyin an automatic version, the turning speed of the speed gear's input shaft (proceeding from an engine) varies with that of the output shaft (responsible for corresponding drive of the drive wheels of the vehicle). Hereafter, the expression "transmission ratio" must be understood as the quotient between the turning speeds of the input and output shafts; if this adimensional parameter is positive it will mean there is no change in direction of turn between said speeds, and if negative it is because there _is_ a change in direction. Obviously, if its absolute value is larger than the unit this will mean a speed reduction, and a multiplication of speed if it is smaller than the unit.

The speed gears presently employed in vehicles can be classified in two large groups:

(a) Constant mesh gears, characterised by having a series of toothed wheels or cogwheels, coaxial with a common shaft (output shaft) and of different turning speeds in relation to said shaft because of being idle-mounted thereon. Each transmission ratio is attained by turn-linking a certain wheel and the output shaft, achieving this with a displaceable sleeve and through appropriate mechanisms called synchronisms or synchronizers. These designs have an input shaft, one (or two) intermediate shafts, an output shaft and another auxiliary shaft for reverse speed.

(b) Epicyclic gears: sun or central planet, planetaries and crowns, coaxial sun and crown, with certain mechanical couplings between them such that each transmission ratio is attained by immobilizing, with the appropriate brake, one of said elements (principally crowns) and/or achieving the equal rotation of two elements with action of the proper disc clutch.

The above two realisations are employed in both passenger and industrial vehicles, b) being the most appropriate for automatic speed gear versions.

The a) type realisations need very precise machining, above all because of their large and heavy synchronisers. Driving power is transmitted through a pair (or at the most two pairs) of meshing teeth, with which it can be argued that excessive weight of metal is used. When there is a large number of speeds, more than six, for example, apart from the mentioned inconveniences there is that of complicated handling, and also the obligatory use of "inhibitors" or mechanisms to prevent the incorrect shift from one speed to another which is not the consecutive speed. The use in these designs of multi-disc clutch units for selecting and connecting a certain transmission ratio, which are of American manufacture, makes the speed gears in question very expensive.

Embodiments of the b) type, such as Wilson versions and the like, also present inconveniences such as those described for type a), although in these of type b) the driving power is channeled through as many pairs of meshing gears as there are planets in their epicyclic gears. A great drawback is that the combinations between their gears are very limited, as there can be very high and even prohibitive turning speeds of some of their elements (sun, planet mount, planets or crowns) when one of their transmission ratios or speeds is connected. Another notable limitation is the number of conditions to be met among their number of planets and the number of teeth of these, of the sun gear and of the crown.

Finally, both constant-mesh speed gears and planetary or epicyclic gears require the incorporation of an additional mechanical group: clutch or torque converter, respectively, thus complicating the functional realization and making it more expensive.

Speed gears based on the contents of this patent of invention application will provide the following principal advantages:

No need of presently know clutches, either mechanical or hydraulic.

No need of hydraulic torque converters, in some applications.

No need of speed synchromesh mechanisms.

Non use of displaceable speed-connection sleeves, with incorporation of one at the most and if it is reasonably justified (for safety, for example), such as a sleeve for reverse speed connection.

Non use of mechanical linkage, or the simplification of that existent, for speed selection and connection.

Use of lighter and therefore less expensive bearings, since those employed will not be subject to considerable radial stress such as in the case, principally, of speed gears of the constant-mesh type currently used.

Greater simplicity in the selection and connection of speeds.

Greater reliability and functionalism.

Elimination of the difficulty, or impossibility in some cases, of a speed connection.

Use of these new speed gear realisations with a greater number of transmission ratios (or number of speeds) than available with present designs, without this implying either greater cost or problems of handling, automation or function.

A saving in fuel consumption as a consequence of the preceding advantage.

The driving power can always be channeled through two or more pairs of meshing teeth, and thus their cutting will require a smaller metric module than present speed gears, the tooth length also being smaller.

Coaxial input and output shafts, no auxiliary shaft being necessary to obtain inversion of the turning direction (reverse speed).

The possibility of all meshing cogwheels having numbers of teeth which are prime with each other, with consequently better meshing.

Simpler housings, with the resulting advantage of less expensive casting, forging, stamping, welding and machining as necessary.

Easy automation, something very difficult to achieve with present speed gears of the constant-mesh type of synchronizers.

Greater simplicity in handling, maintenance and repair.

The possibility of shifting from one speed to another without interrupting or voiding the engine torque.

For the cases of vehicle gearing such as, principally, gearboxes, winches and reduction gear, the definition, calculations, design and manufacture of these units, making use of the contents of this patent of invention application, will permit the following advantages over the corresponding groups presently used:

In gearboxes:

The elimination of displaceable sleeves for the connection of low or high speeds, as well as of their synchronizers.

The possibility of connecting low or high speeds with the vehicle in motion and without interrupting or voiding the engine torque transmission, if this is desired.

The elimination or simplification of mechanical linkage for speed connection.

The possibility of easy realisation of gearboxes having more than two transmission ratios, for example three.

The possibility of designing these gearboxes with two or three shafts and with the desired direction of turn of the plates or couplings of their output shafts, either in the same or opposite direction of turn of the input shaft.

Greater reliability and functionalism, always with assurance of proper connection of the appropriate speed (low, high or intermediate, in the case of three transmission ratios).

In winches:

Elimination of the ring spindle reduction gear (or worm gear), with its notable inconvenience of low performance due to friction loss.

Substantial gear reductions (or high transmission ratios) with cogwheels of small size compared to the wheels which, according to present criteria, would be required to attain the same transmission ratio. For example, with two cogwheels of 54 teeth each and two wheels of 53 teeth each a transmission ratio can be obtained of a value as high as <u>27.25</u>, although for reasons of dynamic balance at least three wheels of 53 teeth and three wheels of 54 teeth should be employed. The cited value of 27.25 is deduced from the expression $(1 - (\frac{53}{54})^2)^{-1} = 27.25$, which is understood perfectly once this specification is read.

Less volume and weight.

Use of lighter bearings.

<u>In reduction gears</u>;

Higher transmission ratio values.

Possibility of using exterior gearing, that is, with no interior teeth (crown wheels), if desired.

All the above, in general lines, are the most outstanding advantages available in Vehicle Transmissions and their Gearing; as regarding applications in industry in general, such being understood as realisations wherein one or more transmission ratios must be used (marine speed-reduction gear, for example, or speed reducers or multipliers in general), the most important advantages are:

Less weight and volume.

Reduced cost.

Greater reliability and functionalism.

Greater simplicity in speed selection and connection.

Finally mention must be made of another advantage regardless of the application made with the contents of this patent of invention application, which is that it is

-7-

always possible to resort to exterior gearing designs, that is, without the use of crown wheels(interior teeth), should this be desired.

SUMMARY OF THE INVENTION

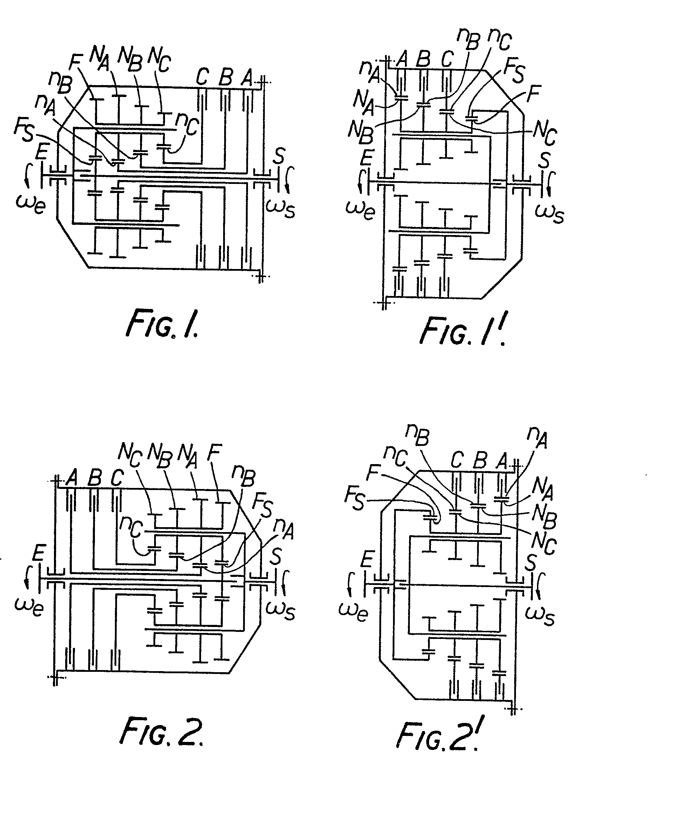

The basic and original idea of the invention consists of the use of some groups of meshing cogwheels in a form different from the present concept of design and assembly, making it possible to achieve maximum simplification, interchangeability of parts, smoother operation and low manufacture and maintenance costs, while retaining or substantially improving the characteristics or functions to be realised. On page 1 of the drawings, Figs. 1, 1', 2 and 2' are diagrams of groups of the said cogwheels corresponding to the possible modules or variations of function and which, appropriately coupled as is later described in the examples, become mechanical groups such as speed gears, gearboxes, etc. having the already-described substantial advantages over present corresponding realisations used today for the same functions. With respect to these figures on page 1 of the drawings, the indicated references represent:

A, B, C = brakes, preferably hydraulic and multi-disc.

F, $F_S$, $N_A$, $N_B$, $N_C$, $n_A$, $n_B$, $n_C$ = number of teeth of the respective cogwheels.

E and S = respectively, input and output flanges or shafts.

$\omega_s$ and $\omega_e$ = turning speeds of the input and output shafts, respectively.

The sub-indexes A, B, C assigned to the references of teeth numbers $n_A$, $n_B$, $n_C$ correspond to the respective brakes. That is, activation of brake A, for example, prevents cogwheel $n_A$ from turning, of brake B prevents cogwheel $n_B$ from turning, etc.

If the cited sub-indexes are designated i, that is, i = A, B, C and the speed of wheel i (namely $n_A$, $n_B$, $n_C$) is designated $\omega_i$, the following fundamental kinematic equations result:

For gear modules of the type of <u>Figs. 1 and 1'</u>:

$$\boxed{\omega_s - (1 - \mu_i) \cdot \omega_e = \mu_i \cdot \omega_i} \qquad (I)$$

For modules such as those of <u>Figs. 2 and 2'</u>:

$$\boxed{\omega_e - (1 - \mu_i) \cdot \omega_s = \mu_i \cdot \omega_i} \qquad (II)$$

and for both cases:

$$\boxed{\mu_i = \frac{F}{F_s} \times \frac{n_i}{N_i}} \qquad (III), \text{ which}$$

means that the different transmission ratios obtained with one or the other type of module are:

$$\boxed{\omega_e / \omega_s = (1 - \mu_i)^{-1}} \quad \text{or} \quad \boxed{\omega_e / \omega_s = (1 - \mu_i)}$$

respectively, and upon braking the turn of cogwheel $n_i$, that is by making $_i$ = 0 upon activating brake i.

As is deduced from the figures in question, and which are sufficiently explicit, all the wheels $N_i$ (which in these figures are three: $N_A$, $N_B$ and $N_C$, but which can be more or fewer than three as desired) along with wheel F are coaxial and turn-linked, and are mounted on a shaft about which they can freely turn; this shaft, which can be called a plantary member mount as in known planetary gears, is turn-linked and not coaxial with the input shaft, to which it is parrallel. The number of planetary member mount shafts, which advisably be more than one for reasons of balance, can be that desired and recommended by proper calculation, and is not conditioned by the number of teeth F, $F_s$, $n_i$ and $N_i$, the only limitation being physical impossibility due to superimposition of bodies. Wheel $F_s$ is coaxial and turn-linked with the output shaft and meshes with wheel F. Wheels $n_i$ mesh with those of $N_i$ ($n_A$ with $N_A$, $n_B$ with $N_B$, etc.). All the wheels $n_i$ are coaxial with the output shaft and are mounted thereon with freedom of turn, adequate bushings or bearings being used for this purpose. Each wheel $n_i$ is turn-linked with one or more discs by means of appropriate members, so that they can be immobilised through the corresponding brake(s) acting upon the respective disc(s).

Actually each of the gear modules of these Figs. 1, 2, 2' and 1' corresponds to a respective speed gear, for which reason and to clarify possible doubts in interpretation and, above all, emphasise the excellent function, the following is an example centred on the execution of Fig. 1: with F = 30, $F_s$ = 29, $n_A$ = 32, $n_A$ = 27, $n_B$ = 25, $N_B$ = 34, $n_C$ = 20 and $N_C$ = 39, upon calculating the values of $\mu_A$, $\mu_B$ and $\mu_C$ according to the previously cited expression (III):

$$\mu_A = \frac{30}{29}\ \frac{32}{27}\ \frac{320}{261}\ ; \mu_B = \frac{30}{29}\ \frac{25}{34}\ \frac{375}{495}\ ; \mu_C = \frac{30}{29}\ \frac{20}{39} = \frac{200}{377}$$

and specifying equation (I), the following equations are deduced:

$$261\omega_B + 59\omega_e = 320\omega_A\ ;\ 493\omega_s - 118\omega_e = 375\omega_B\ ;$$
$$377\omega_s - 177\omega_e = 200\omega_C$$

from which and with $\omega_B$ = 0, $\omega_C$ = 0 and $\omega_A$ = 0 the following table of values is deduced:

| | $\omega_B/\omega_e$ | $\omega_c/\omega_e$ | $\omega_A/\omega_e$ | $(\omega_e/\omega_s)$ |
|---|---|---|---|---|
| $1^a$ | 0 | -0'4338 | 0'3796 | 4'178 |
| $2^a$ | 0'3026 | 0 | 0'5673 | 2'130 |
| Reverse | -0'6119 | -1'3111 | 0 | -4'424 |

from which it can be seen:

Two transmission ratios are available of values of 4.178 and 2.130 for 1st and 2nd forward speeds, respectively.

One transmission ratio is available for reverse speed, of a value of 4.424.

To pass from 1st ($\omega_B = 0$) to ($\omega_C = 0$) brake C has to immobilise its corresponding disc or discs, and consequently wheel $n_C$, from the initial speed of the value $\omega_C = -0.4338\omega_e$. For the reverse step, or from 2nd speed to 1st speed, it will be brake B which will immobilise wheel $n_B$ through the corresponding discs, from an initial speed of value $\omega_B = 0.3026\omega_e$. The rotation speeds of the discs of brake B and C (and of the corresponding cogwheels turn-linked with them, $n_B$ and $n_C$), when the reverse speed is connected ($\omega_A = 0$), have the values of $-0.6119\omega_e$ and $-1.3111\omega_e$, respectively.

Some of the examples included in this patent application have a table of values similar to that described, for interpretation thereof permits judgment of the excellence of function corresponding to each execution.

It is of interest to stress the originality and simplicity of the transmissions (speed gears, gearboxes, winches etc.) which can be defined and realised with these gear modules and their brakes, constituting the basic content of this patent of invention application; their novelty is evident from simply a study of any present realisation, confirming that to-date they have not been used doubtless because until now no one has put into practice the combination of gears and brakes described, nor consequently has discovered their considerable advantages.

Adequate combination of these modules of gears and brakes permits a wide range of executions. The examples described here correspond to a range of possibilities which naturally is not limitative.

## BRIEF DESCRIPTION OF THE DRAWINGS

In total there are twelve pages of drawings containing 28 figures. Figs. 1, 1', 2 and 2' of the first page have already been explained. The remaining figures are the following:

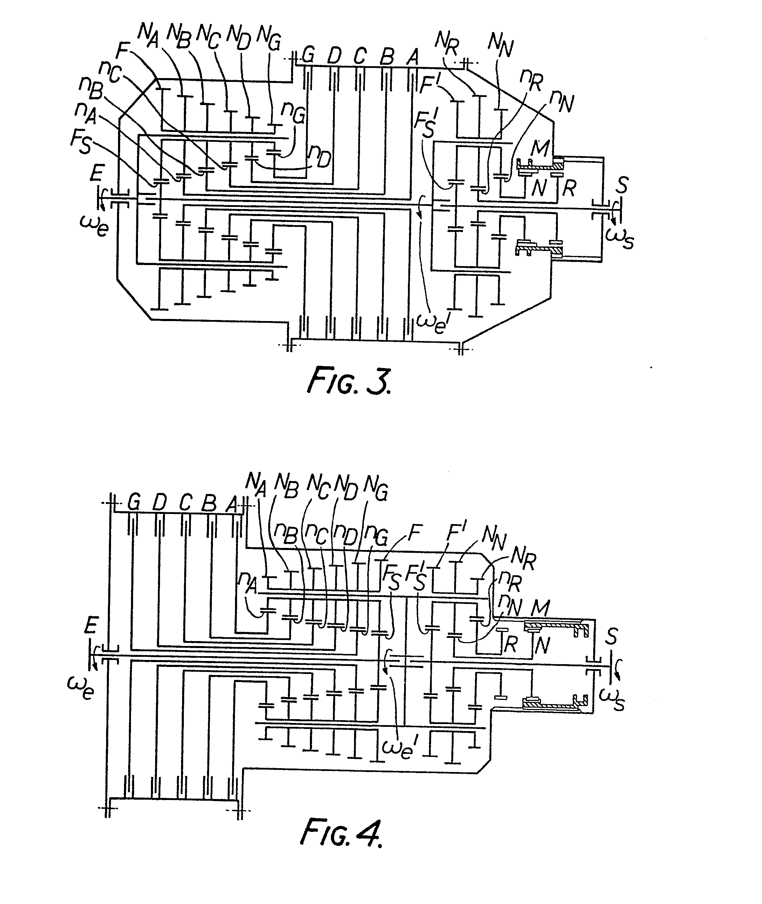

Figs. 3, 4, 5, 6, 7, 8, 9, 10, 11, and 12 correspond to diagrams of speed gears for application to vehicles. In all of them, E and S indicate the coupling flanges of their input and output shafts, respectively. The references $\omega_e$, $\omega_e'$, $\omega_1$, $\omega_2$ indicate the turning speeds of the shafts where they are situated. The remaining references correspond to cogwheels (their respective number of teeth being indicated with the same reference): F, $F_s$, F', $F_s'$, FF'', $F_s''$, $n_A$, $n_B$, $n_C$... $N_A$, $N_B$, $N_C$... and to brakes: A, B, C, ...; in Figs. 3 and 4 the reference M signifies a displaceable sleeve for forward speeds (when meshing with the drive teeth of wheel N) and for revese speed (meshing with wheel R), which sleeve cannot turn since its exterior teeth mesh with interior teeth of the speed gear housing. As previously indicated, all these speed gears are formed by combinations of gear modules of the figures on page 1 of the drawings:

The Speed Gear of Figs. 3, 7, and 8 is formed by modules of Fig. 1.

The Speed Gear of Figs. 4, 6 and 12 contains modules of Fig. 2 and of Fig. 1.

The Speed Gear of Figs. 5, 9 and 11 is defined by modules of Fig. 1 followed by modules of Fig. 2, and finally

The Speed Gear of Fig. 10 is a succession of two modules of Fig. 1 and one module of Fig. 2.

Fig. 13 is a diagram of a version which can be called "multiplier of number of transmission ratios" or "speed multiplier", the usefulness of which will be justified later with the corresponding example. Its reference are already know. It is a grouping of modules of Fig. 1 and of Fig. 2.

Fig. 14 is a gearbox having three transmission ratios which are obtained by activating brakes A, B and C. S' indicates an output flange for connection to a P.T.O. (power take-off). $S_1$ and $S_2$ are the flanges for connection to output shafts of the engine torque, an epicyclic gear between them distributing in the appropriate proportions the output engine torques. Cogwheel 1 transmits, through an intermediate wheel (without a reference in the figure and whose presence is not indispensable), the engine torque to cogwheel 2 which is turn-linked and coaxial with the planetary member mount of the cited epicyclic gear. The other references are already known: A, B, C = brakes. $F$, $F_s$, $n_A$, $n_C$, $N_A$, $N_B$, $N_C$ = cogwheels. This Fig. 14 contains a module such as that already described for Fig. 1.

Fig. 15 shows a turn-direction inverter; with application of brake A there is a transmission ratio of unit value, and with application of brake R the transmission ratio acquires the value -1 (inversion of the direction of turn). This Fig. 15 is formed by a module of Fig. 1 and another of Fig. 2.

Fig. 16 diagrams application of a module of Fig. 1' (input by the multiple planetary member mounts and output by a crown gear) for the definition of a winch (high transmission ratio).

Figs. 17 and 17' are the diagram and illustration of execution, respectively, of a reduction gear in vehicles. It employs the simplest module derived from Fig. 1. In Fig. 17, E, S, $\omega_e$ and $\omega_s$ are the input, output and their respective turning speeds; n, N, F, and $F_s$ are cogwheels. In Fig. 17' the new references with respect to Fig. 17 indicate: 1 = rear-axle shaft, 2 = planetary member mount shaft, 3 = wheel rim, 4 = brake drum, 5 = end of the axle journal, and 6 = wheel hub.

Figs. 18 and 18' are also the diagram and illustration of execution of a vehicle reduction gear. Here use is made of the simplest module derived from Fig. 1'. The references indicate the same as for Figs. 17 and 17', 7 being a member with exterior teeth for meshing with the crown n, and whose interior is teethed or grooved for meshing with the teeth of the end of 5. The function of 7 is to prevent crown n from turning.

Fig. 19 is a speed reducer and inverter, for example for marine applications. Application of brake A gives a positive reduction, and with brake R the reduction is negative (there is inversion of the direction of turn). As can be seen, it is formed by two modules of Fig. 1.

Fig. 20 as in the case of the preceding figure, is another speed reducer and inverter, for example for marine applications. Brakes A and R perform the functions as described for Fig. 19. It is formed by one module of Fig. 1 and another of Fig. 1'.

Fig. 21 is a speed reducer, engageable upon application of brake A. It is for application in general industry, and its transmission ratio can be very high. The references in this figure are already known. This is a group of two modules of Fig. 1'.

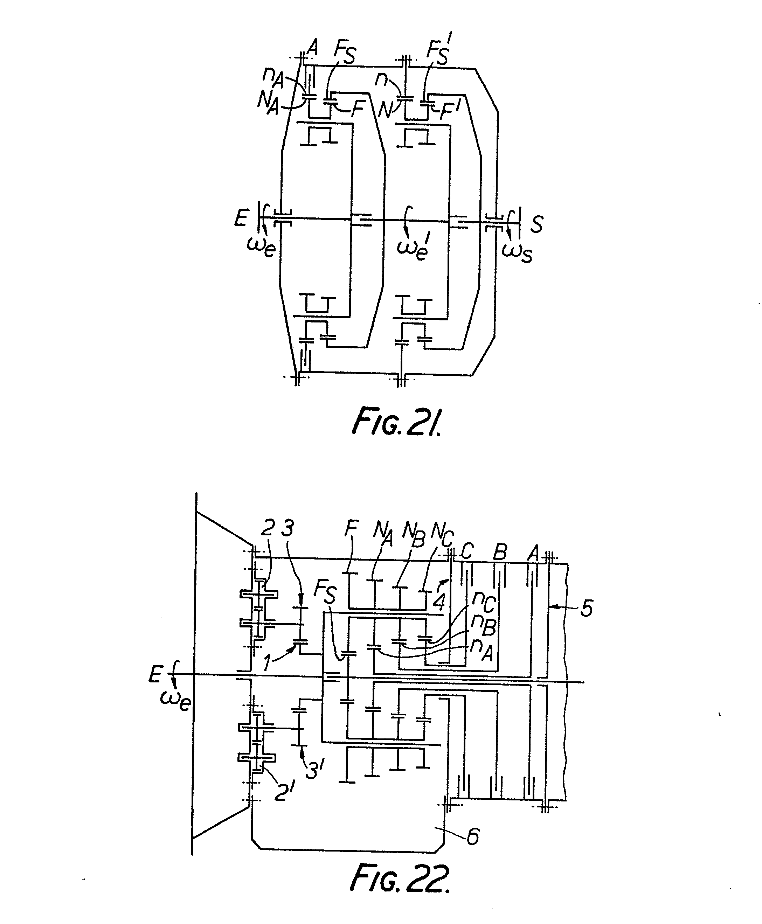

Fig. 22 corresponds to a partial diagram of a speed gear incorporating, as first module of gears and brakes, that of Fig. 1. Illustrated in this Fig. 22 are two oil pumps for gearing identified as 2 and 2', which are activated by the mesh between 3 and 3' with cogwheel 1, which is turn-linked and coaxial with the input shaft E. 6 is the lubricating oil pan. The cited oil pumps, which can be installed in any of the described realisations, can perform the functions of making pressurised oil available for driving the multi-disc brakes and for lubricating gears, bearings, etc., respectively; alternatively, a single pump can be used for both functions. In Fig. 22 the references 4 and 5 identify some separating panels or members which, along with the appropriate radial seals, gaskets and leaktight joints, result in the disc brakes (A, B, C) corresponding to versions of dry brakes.

Fig. 23 is a partial constructive sketch or design representing the multi-disc brakes (without references in this figure) with which, when they are immobilised by the action of the ring pistons or brakes A, B, C, the different speeds or transmission ratios are connected. 1 is the output shaft of the gear module (of Fig. 1) here represented, the cogwheel $F_s$ being solid with this shaft. F, $N_A$, $N_B$ and $N_C$ are the cogwheels cut from the same part;

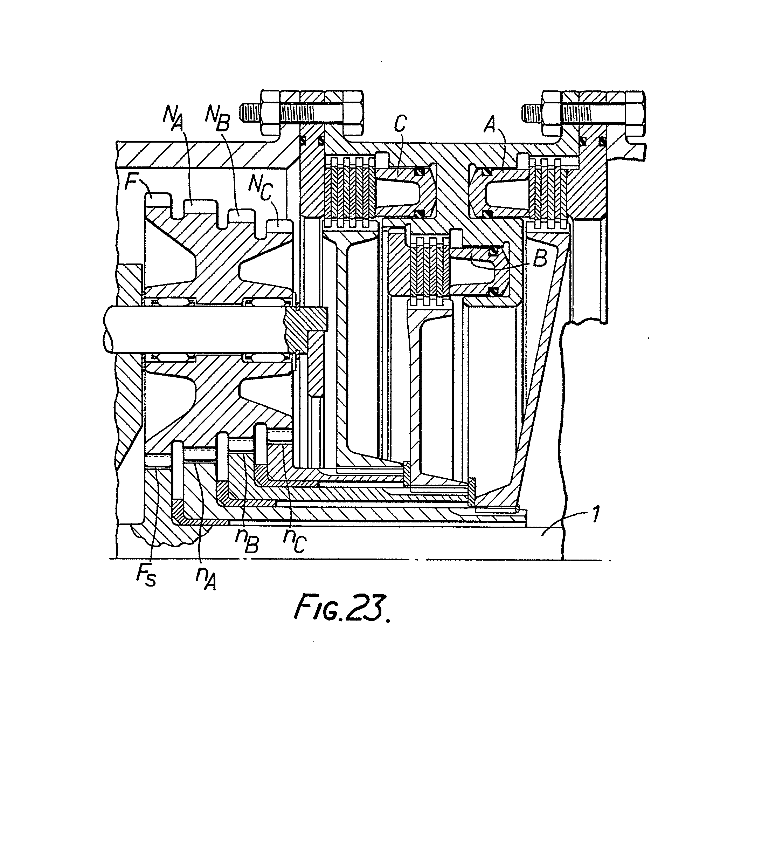

they can also be separate members which are turn-linked by means of the appropriate system, such as interior grooving for their mounting upon a bushing grooved on the exterior and in the bore of which the corresponding shaft freely turns, etc. Naturally, these wheels must be suitably placed depending upon the number of teeth and number of planetary member mount shafts. $F_s$, $n_A$, $n_B$ and $n_C$ are cogwheels meshing respectively with $F$, $N_A$, $N_B$ and $N_C$. The horizontal axis of symmetry is marked in this Fig. 23, without this implying it is necessary to install an even number of units $F-N_A-N_B-N_C$ (that is, an even number of multiple planets), since this can be an uneven number.

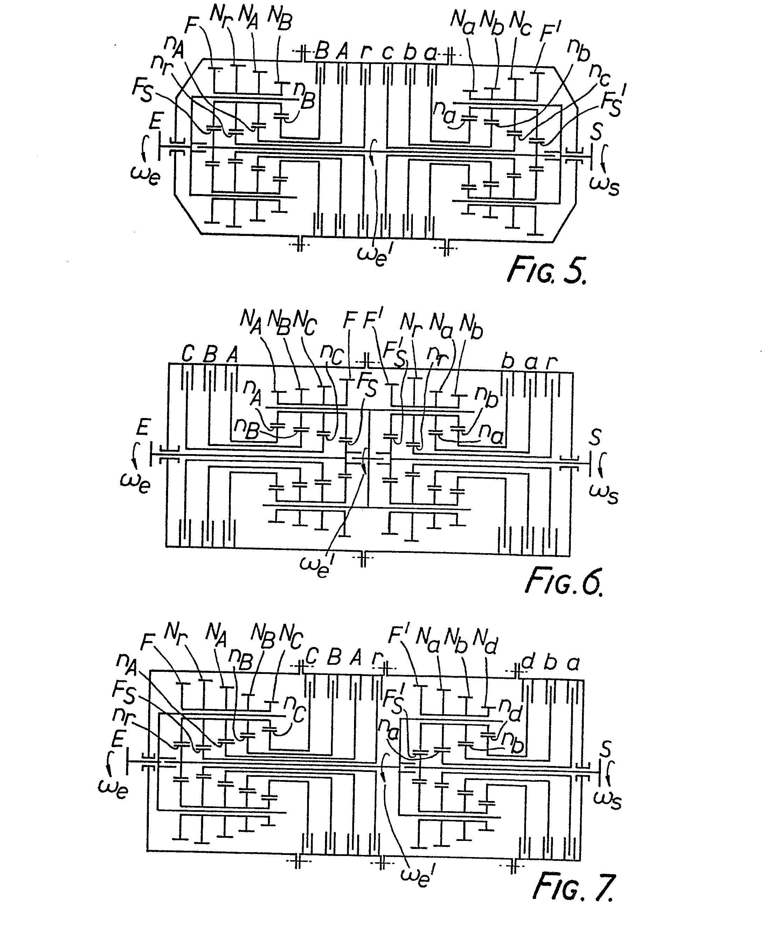

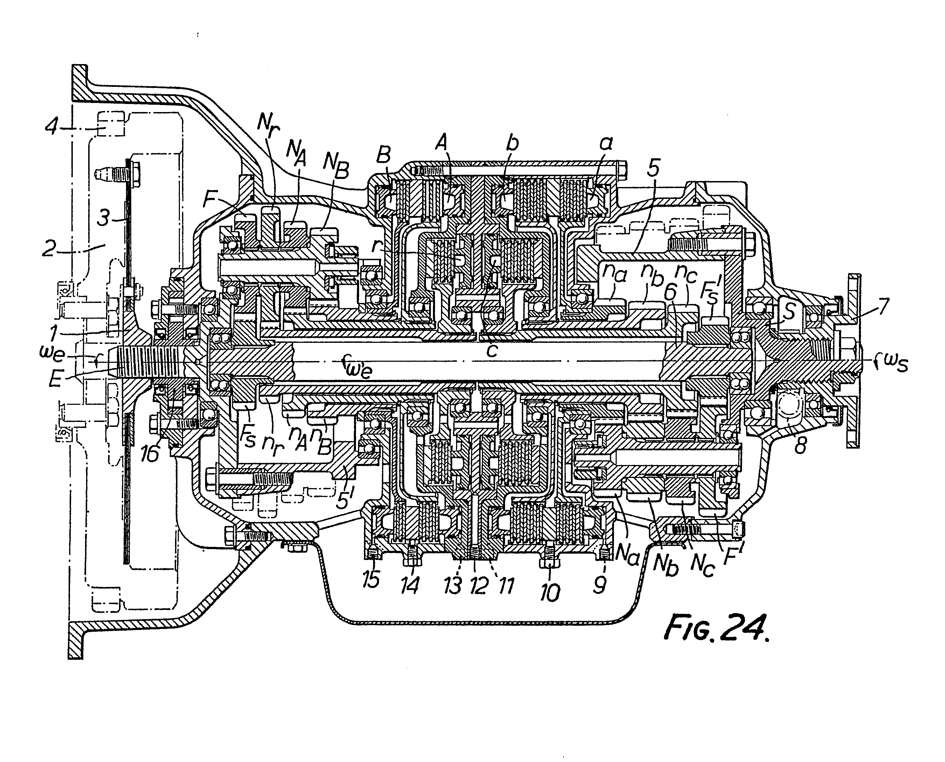

Fig. 24 corresponds to the constructive adaptation of the speed gear diagrammed in Fig. 5. The references in this figure of E, S, F, $F_s$, F', $F'_s$, $n_r$, $n_A$, $n_B$, $N_r$, $N_A$, $N_B$, $n_a$, $n_b$, $n_c$, $N_a$, $N_b$ and $N_C$ are already know, that is, the input and output shafts and number of teeth, respectively. 1 is the interiorly-fluted hub yoked over the gearing of the end of the input shaft E, and which through plates 3 transmits the torque and the speed of flywheel 2 of the heat engine. 4 is the starting motor gear of the vehicle engine. 5 and 5' are the planetary member mounts. 6 is the intermediate shaft, the rotation speed of which is designated $\omega'_e$. 7 is the output flange. 8 is the speedometer cable connection (the known "worm"). 9, 11, 13 and 15 are the pressurised-oil intakes for brakes a, b, A and B, respectively, there being two intakes 12, one for the brake oil of r and the other of c. Finally, B, A, r, c, b and a are the ring pistons for the hydraulic braking of the corresponding multiple discs. This figure has actually been realised with calculation of its components for a maximum input torque of the value 13 m.daN, for application in a passenger vehicle with six forward and one reverse speed. Its transmission ratios, number of teeth and kinematic characteristics are given in the example of Fig. 14; its length, between the support face of the heat engine block and its output flange, is 475mm, from which its notable characteristics can be judged. 16 indicates the inner gearing of the oil pump for providing pressurised oil for multi-disc brakes (also used, if necessary, for forced lubrication of gearing, bearing, etc.). More references have not been included to cover all the parts of this realisation, in the understanding the figure is sufficiently explicit without unnecessarily complicating it.

DESCRIPTION OF A PREFERRED EMBODIMENT

It is obvious that in view of the richness and great variety of possible applications and embodiments offered by the use of this invention, there is no specific preferred embodiment; in any case, it is possible to cite as such those described for Figs. 1, 2, 1' and 2', for with them or with some suitable combinations or couplings thereof it is possible to achieve speed gears of the convenient number of transmission ratios and with optimum values of the latter. As has been said, the modules of gears and brakes of Figs. 1, 1', 2 and 2' and their various combinations constitute the basic and fundamental idea of this invention. To emphasise its notable advantages, the following table summarises the examples to be described later:

| NEW SPEED GEARS FOR PASSENGER VEHICLES | | | | | | |
|---|---|---|---|---|---|---|
| | | Total | No. of | Transmission ratios (values) | | |
| Fig. | No. of | No. of | brakes/ | Forward | | Reverse |
| No. | speeds | brakes | speed | Max. | Min. | Max. |
| 3 | 5 | 5 | ONE | 3.930 | 0.846 | 4.367 |
| 4 | 5 | 5 | ONE | 3.649 | 0.758 | 3.881 |
| 5 | 4 | 6 | TWO | 3.726 | 1.010 | 3.998 |
| 5(14) | 6 | 6 | TWO | 3.581 | 0.827 | 3.492 |
| 6 | 4 | 6 | TWO | 3.626 | 1.019 | 3.800 |
| 7 | 5 | 7 | TWO | 3.645 | 0.943 | 3.791 |
| 8 | 6 | 8 | TWO | 3.645 | 0.840 | 3.791 |

NEW SPEED GEARS FOR INDUSTRIAL VEHICLES

| | | | | | | |
|---|---|---|---|---|---|---|
| 7 | 9 | 7 | TWO | 7.402 | 0.887 | 9.350 |
| 8 | 6 | 8 | TWO | 7.496 | 0.830 | 8.247 |
| 9 | 7 | 9 | TWO | 8.402 | 0.670 | 9.455 |
| 10 | 8 | 7 | THREE | 9.312 | 1.019 | 10.611 |
| 11 | 12 | 8 | TWO | 9.020 | 0.830 | 10.771 |
| 12 | 16 | 9 | TWO | 11.455 | 0.836 | 12.564 |

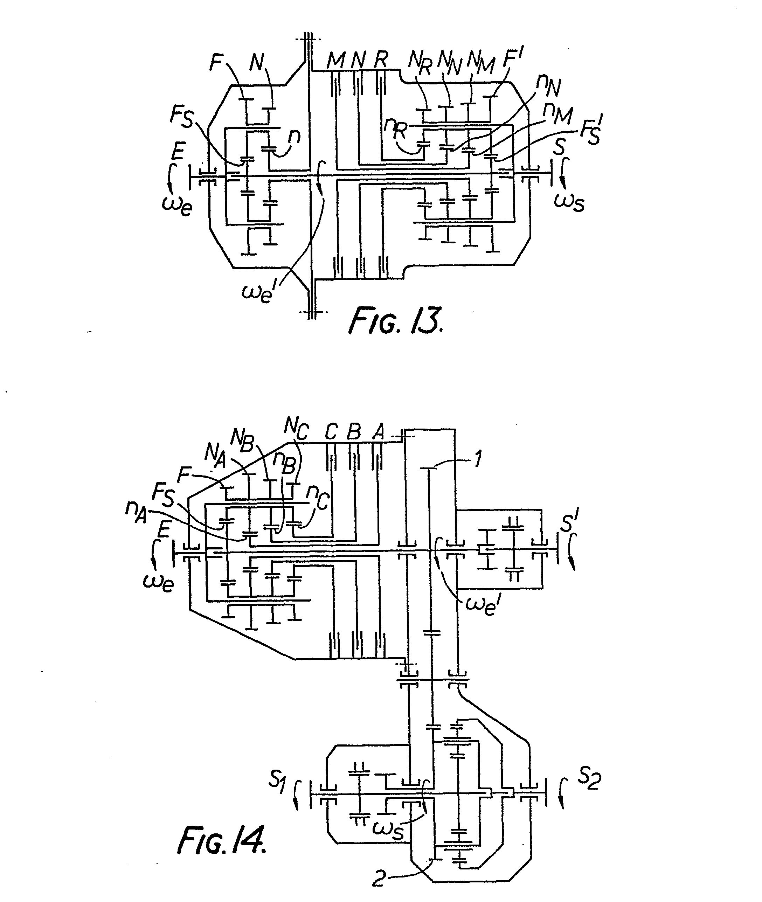

The column of number of speeds refers to forward speeds. The column of "number of brakes/speed" indicates the number of brakes applied for connection with a certain transmission ratio. It is of interest to note that it is possible to design and manufacture a speed gear, for either a passenger or industrial vehicle, such that the connection of each speed is achieved with application of a single brake, as in the case of Figs. 3 and 4, even though the number of speeds is different than five. Speed gears can also be made in which each speed requires the simultaneous application of two brakes, and so that the shift from one speed to the next, lower or higher, only requires the substitution of a single brake, that is, one brake ceases to operate while another different brake is activated (this is the case of the examples of Figs. 5, 6, 8 and 7 in the adaptation to passenger vehicles). Obviously these embodiments of two brakes, as well as those of single brake, can be the most suitable for their automation. If it is desired to reduce the total number of brakes, it is possible to resort to embodiments such as those of Figs. 11 and 12 (which can be called the 3x4 and 4x4 versions, respectively), and while each speed requires the simultaneous application of two brakes, there are shifts from a certain speed to the next which demand change of the two brakes, that is, their substitution by two other different brakes. In the case of Fig. 10 (2x2x2 version), the connection of each speed requires the simultaneous application of <u>three</u> brakes, and there are certain shifts in which the three brakes must be changed (for the example in question this occurs upon shifting from the 4th to the 5th speed or vice versa).

### SPEED GEAR FOR PASSENGER VEHICLE ACCORDING TO FIG. 3

The example shown corresponds to the following number of teeth: $F = 41$, $F_s = 18$, $N_A = 38$, $n_A = 21$, $N_B = 36$, $n_B = 23$, $N_C = 34$, $n_C = 25$, $N_D = 32$, $n_D = 27$, $N_G = 30$, $n_G = 29$ for the first module of gears. For the second module $F' = 34$, $F'_s = 25$, $N_R = 38$, $n_R = 21$, $N_N = 24$ and $n_N = 35$. Calculation of the expressions of $\mu_i$ according to formula (III) and its substitution in formula (I) gives the following fundamental kinematic equations:

$$228\omega'_e + 59\omega_e = 287\omega_A \quad ; \quad 648\omega'_e + 295\omega_e = 943\omega_B$$

$$612\omega'_e + 413\omega_e = 1025\omega_C \quad ; \quad 192\omega'_e + 177\omega_e = 369\omega_D$$

$$540\omega'_e + 649\omega_e = 1189\omega_G \quad ; \quad 60\omega_s + 59\omega'_e = 119\omega_N$$

$$475\omega_s - 118\omega'_e = 357\omega_R$$

from which the table of values is deduced:

| Speed | $\omega_A$ | $\omega_B$ | $\omega_C$ | $\omega_D$ | $\upsilon_G$ | $\omega_e$ | $\omega_R$ | $\omega_N$ | $\omega_e/\omega_s$ |
|---|---|---|---|---|---|---|---|---|---|
| $1^a$ | 0 | 0.135 | 0.248 | 0.345 | 0.428 | -0.259 | 0.424 | 0 | 3.930 |
| $2^a$ | -0.156 | 0 | 0.131 | 0.243 | 0.339 | -0.455 | 0.746 | 0 | 2.234 |
| $3^a$ | -0.331 | -0.151 | 0 | 0.129 | 0.239 | -0.675 | 1.106 | 0 | 1.507 |
| $4^a$ | -0.527 | -0.321 | -0.148 | 0 | 0.127 | -0.922 | 1.511 | 0 | 1.103 |
| $5^a$ | -0.749 | -0.513 | -0.315 | -0.146 | 0 | -1.202 | 1.970 | 0 | 0.846 |
| Rev. | -0.527 | -0.321 | -0.143 | 0 | 0.127 | -0.922 | 0 | -0.573 | -4.367 |
| Rev. | -0.749 | -0.513 | -0.315 | -0.146 | 0 | -1.202 | 0 | -0.746 | -3.349 |

wherein, $\omega_A$, $\omega_B$, $\omega_C$ are the rotation speeds of $n_A$, $n_B$, $n_C$, respectively. Sleeve M immobilises wheel $n_N$ for forward speeds and wheel $n_R$ for reverse speed. The above table of kinematic values is sufficiently explicit for judging the excellent function: application of brakes A, B, C, D and G, with wheel $n_N$ immobile, originates the five transmission ratios of the five forward speeds, equivalent to anulment of the speeds $\omega_A$, $\omega_B$, $\omega_C$, $\omega_D$ and $\omega_G$, respectively. The two reverse speed transmission ratios, with wheel $n_R$ being immobilised by the opportune movement of sleeve M, are achieved upon making $\omega_D = 0$ and $\omega_G = 0$, that is, upon braking in D and G, respectively. The action of a brake for connecting a certain speed results in the immobilisation of a disc or discs found rotating at <u>low</u> speed. For example, for passing from 3rd to 4th speed, disc D is immobilised from an initial turning speed of value $0.129\omega_e$ ($\omega_e$ is, as is know, the rotation speed of the input shaft E, or the rotation speed of the heat engine of the vehicle). The absence of a clutch is justified upon considering that with $\omega_S = 0$ for a standing vehicle, for starting or the initiation of forward speed the sleeve M will have been located in the position in which $\omega_N = 0$; transfer of these values to the preceding kinematic equations gives: $\omega_e = 0$, $\omega_A = 0.206\omega_e$, $\omega_B = 0.313\omega_e$, $\omega_C = 0.4\omega_e$, $\omega_D = 0.48\omega_e$ and $\omega_G = 0.546\omega_e$, the same as saying that in initiation of the forward speed, for which the 1st speed must be connected, meaning that braking must be made with disc A to make $\omega_A = 0$, the discs braked by A must have their rotation speed annulled from an initial value thereof of $0.206\omega_e$. If the start is in reverse speed, and in the maximum value of its transmission ratio, the disc braked by D will have to be immobilised from an initial speed of value $0.48\omega_e$, in this case sleeve M being in the position, as is obvious, in which $\omega_R = 0$. It is thus understood, in view of the deduced speeds, that the shifting of the discs which brake

A and D, respectively, replaces the function of the conventional clutch, for which proper modulation will be provided of the hydraulic pressure in the pistons of the cited brakes, for example. For other examples, comments on their tables of kinematic values are not considered necessary, since they would be similar to those already given.

SPEED GEAR FOR PASSENGER VEHICLE ACCORDING TO FIG. 4

This example corresponds to $F = 39$, $F_s = 20$, $N_G = 32$, $n_G = 27$, $N_D = 31$, $n_D = 28$, $N_C = 28$, $n_C = 31$, $N_B = 24$, $n_B = 35$, $N_A = 19$, $n_A = 40$, $F' = 33$, $F'_s = 26$, $N_R = 38$, $n_R = 21$, $N_N = 24$ and $n_N = 35$. The kinematic equations are:

$$19\omega_e + 59\omega'_e = 78\omega_A \; ; \; 32\omega_e + 59\omega'_e = 91\omega_B$$
$$560\omega_e + 649\omega'_e = 1029\omega_C \; ; \; 155\omega_e + 118\omega'_e = 273\omega_D$$
$$640\omega_e + 413\omega'_e = 1053\omega_G \; ; \; 208\omega_s + 177\omega'_e = 385\omega_N$$
$$988\omega_s - 295\omega'_e = 693\omega_R$$

The table of kinematic values is:

| Speed | $\omega_A/\omega_e$ | $\omega_B/\omega_e$ | $\omega_C/\omega_e$ | $\omega_D/\omega_e$ | $\omega_s/\omega_e$ | $\omega_{e'}/\omega_e$ | $\omega_R/\omega_e$ | $\omega_N/\omega_e$ | $\omega_e/\omega_s$ |
|---|---|---|---|---|---|---|---|---|---|
| $1^a$ | 0 | 0.143 | 0.341 | 0.429 | 0.481 | −0.322 | 0.528 | 0 | 3.649 |
| $2^a$ | −0.167 | 0 | 0.202 | 0.333 | 0.395 | −0.542 | 0.889 | 0 | 2.167 |
| $3^a$ | −0.409 | −0.208 | 0 | 0.195 | 0.269 | −0.863 | 1.414 | 0 | 1.362 |
| $4^a$ | −0.750 | −0.500 | −0.284 | 0 | 0.093 | −1.314 | 2.153 | 0 | 0.895 |
| $5^a$ | −0.929 | −0.553 | −0.433 | −0.102 | 0 | −1.550 | 2.540 | 0 | 0.758 |

As can be deduced from the above table, this is a realisation of five forward speeds.

SPEED GEAR FOR PASSENGER VEHICLE ACCORDING TO FIG. 5

In this case, different from the previous two, each speed requires the simultaneous application of two brakes. For $F = 34$, $F_s = 25$, $N_r = 38$, $n_r = 21$, $N_A = 27$, $n_A = 32$, $N_B = 24$, $n_B = 35$, $F' = 37$, $F'_s = 22$, $N_C = 27$, $n_C = 32$, $N_b = 24$, $n_b = 35$, $N_a = 20$ and $n_a = 39$, the kinematic equations are:

$$675\omega'_e + 413\omega_e = 1088\omega_A \; ; \quad 60\omega'_e + 59\omega_e = 119\omega_B \; ;$$

$$475\omega'_e - 118\omega_e = 357\omega_r \; ; \quad 440\omega'_e + 1003\omega_s = 1443\omega_a \; ;$$

$$528\omega'_e + 767\omega_s = 1295\omega_b \; ; \quad 297\omega'_e + 295\omega_s = 592\omega_C$$

and the kinematic summary:

| Speed | $\omega_A/\omega_e$ | $\omega_B/\omega_e$ | $\omega_r/\omega_e$ | $\omega_a/\omega_e$ | $\omega_b/\omega_e$ | $\omega_c/\omega_e$ | $\omega_e/\omega_e$ | $\omega_e/\omega_s$ |
|---|---|---|---|---|---|---|---|---|
| 1$^a$ | 0 | 0.187 | -1.145 | 0 | -0.091 | -0.173 | -0.612 | 3,7256 |
| 2$^a$ | -0.231 | 0 | -1.639 | 0 | -0.145 | -0.278 | -0.983 | 2.3182 |
| 3$^a$ | -0.231 | 0 | -1.639 | 0.171 | 0 | -0.156 | -0.983 | 1.4773 |
| 4$^a$ | -0.231 | 0 | -1.639 | 0.388 | 0.185 | 0 | -0.983 | 1.0101 |
| Rev. | 0.534 | 0.621 | 0 | -0.098 | -0.047 | 0 | 0.248 | -3.9983 |

This is a version of four forward speeds. As to the start of the vehicle, brakes a and A ($\omega_a$ = 0 and $\omega_A$ = 0), with $\omega_s$ = 0 and supposing non-simultaniety in their application, in case $\underline{A}$ acts first it is deduced that $\omega_a$ = -0.19$\omega_e$, a small value and which also demonstrates the <u>un</u>necessity of the conventional clutch. The same occurs in the reverse speed start, in which case and with $\omega_s$ = 0 and $\omega_r$ = 0, the result is $\omega_C$ = 0.13$\omega_e$.

SPEED GEAR FOR PASSENGER VEHICLE ACCORDING TO FIG. 24

The diagram for this example also corresponds to Fig 5. The number of teeth are: F = 28, $N_r$ = 32, $N_A$ = 24, $N_B$ = 20, $n_r$ = 21, $n_A$ = 29, $n_B$ = 33, $F_s$ = 25, $N_a$ = 19, $N_b$ = 21, $N_C$ = 23, F' = 30, $n_a$ = 33, $n_b$ = 31, $n_c$ = 30 and $F'_s$ = 23, with which values the specification of formulas (I), (II) and (III) leads to:

$$150\omega'_e + 53\omega_e = 203\omega_A \quad ; \quad 437\omega'_e + 553\omega_s = 990\omega_a$$
$$125\omega'_e + 106\omega_e = 231\omega_B \quad ; \quad 161\omega'_e + 149\omega_s = 310\omega_b$$
$$200\omega'_e - 53\omega_e = 147\omega_r \quad ; \quad 529\omega'_e + 371\omega_s = 900\omega_C$$

determination being elemental of the values of the summary table:

| Speed | $\omega_e/\omega_s$ | Step (%) | $\omega_A/\omega_e$ | $\omega_B/\omega_e$ | $\omega_r/\omega_e$ | $\omega_e'/\omega_e$ | $\omega_e/\omega_e$ | $\omega_b/\omega_e$ | $\omega_c/\omega_e$ |
|---|---|---|---|---|---|---|---|---|---|
| 1 | 3.5815 | | 0 | 0.268 | −0.841 | −0.353 | 0 | −0.049 | −0.093 |
| 2 | 2.6192 | 36.7 | 0 | 0.268 | −0.841 | −0.353 | 0.057 | 0 | −0.051 |
| 3 | 1.9849 | 31.9 | 0 | 0.268 | −0.841 | −0.353 | 0.126 | 0.059 | 0 |
| 4 | 1.4923 | 33 | −0.365 | 0 | −1.514 | −0.848 | 0 | −0.118 | −0.222 |
| 5 | 1.0914 | 36.7 | −0.366 | 0 | −1.514 | −0.848 | 0.138 | 0 | −0.121 |
| 6 | 0.8270 | 34.9 | −0.3661 | 0 | −1.514 | −0.848 | 0.301 | 0.141 | 0 |
| Rev. | −3.4923 | − | 0.457 | 0.502 | 0 | 0.285 | −0.043 | 0 | 0.037 |

with which all the kinematic data of function are available.

With respect to the starting of the vehicle, it is enough to consider that in <u>forward speed</u>:

$$\omega_s = 0; \omega_A = 0; \omega'_e = -0.3533\omega_e; \omega_a = \underline{-0.15597\omega_e},$$

or else

$$\omega_s = 0; \omega_a = 0; \omega'_e = 0; \omega_A = 0.26108\omega_e,$$

and <u>for reverse speed</u>:

$$\omega_s = 0; \omega_r = 0; \omega'_e = 0.265\omega_e; \omega_b = \underline{0.1376\omega_e}$$

or else

$$\omega_s = 0; \omega_b = 0; \omega'_e = 0; \omega_r = -0.36054\omega_e,$$

and therefore, and seeking minimal slippage speed of the brake discs, the initiation of forward speed will occur with the discs of <u>A</u> being braked (that is $\omega_A = 0$) and later the discs of <u>a</u> from their initial speed value $\omega_a = -0.15597\omega_e$. Start in reverse speed will be made with first $\omega_r = 0$ and then immobilising the discs of <u>b</u> from their initial turning speed of value $\omega_b = 0.1376\omega_e$ ($\omega_e$, speed of the input shaft, is obviously the turning speed of the vehicle's heat engine). This example of Fig. 14, which must be considered at the constructive level of preliminary design to form an idea of its utility, has <u>six</u> forward transmission ratios or speeds, and is of shorter length than present realisations of only <u>four</u> speeds, both being for the same application (engine torque and maximum rotation rate of the engine).

With respect to the brake pairs $M_i$ (i = a, b, r, A, B and C) in the corresponding multiple discs, inasmuch as the vehicle's heat engine has a maximum torque of value 13 m.daN, they are of the following order: $M_A$ = 50 m.daN, $M_B$ = 29 m.daN, $M_r$ = 36 m.daN, $M_a$ = 84 m.daN, $M_b$ = 95 m.daN and $M_C$ = 63 m.daN, values which can be attained easily with a ring-piston hydraulic drive pressure of some 8 bars, with a friction coefficient between said discs of an approximate value of 0.09. The perfection and ease of speed selection and connection is understood simply by the fact that the connection of each is achieved merely by making pressurised oil pass to the proper volumes where the pistons b, a, r, A, B and C are located (see Fig. 14), so that each speed will be defined by the simultaneous action of two of these pistons. For this example the following table graphically expresses the sequence and respective combination of speed connections, an "X" indicating the piston in action (and for which, obviously, $\omega_i = 0$, or in other words nil speed of the cogwheel $n_i$).

| Speed | Pistons in action | | | | | | Transmission ratio ($\omega_e/\omega_s$) |
|---|---|---|---|---|---|---|---|
| | A | B | r | a | b | C | |
| $1^a$ | x | | x | | | | 3.5815 |
| $2^a$ | x | | | x | | | 2.6192 |
| $3^a$ | x | | | | | x | 1.9849 |
| $4^a$ | | x | x | | | | 1.4923 |
| $5^a$ | | x | | x | | | 1.0914 |
| $6^a$ | | x | | | | x | 0.8270 |
| Reverse speed | | | x | x | | | -3.4923 |

Naturally, and for both manual and automatic action, it is evident that the proper hydraulic lines, along with suitable sensors, electrovalves, hydraulic controls, etc., will achieve the corresponding combinations of each speed. As was indicated at the start, there is no mechanical linkage whatever. Fig. 24 does not show those lines, electrovalves, etc., nor the bores for introducing oil for lubricating gears and bearings, since this is merely an explicative drawing. For the remaining examples, and so as not to unnecessarily overload this patent application with numbers, tables similar to that above are included, along with the number of teeth, making it possible to prepare tables of kinematic values - if desired - once the proper equations are determined according to the previously-cited formulas (I), (II) and (III).

If the same constructive concept of this Fig. 14 is used, retaining the number of teeth of the example just described, with the exception of wheels $N_B$, $n_B$, $n_b$ and $n_C$ which would have the new values $N_B$ = 19, $n_B$ = 34, $n_b$ = 30 and $n_C$ = 28, the six forward transmission ratios are obtained: 1st = 3.5815, 2nd = 2.4435, 3rd = 1.6639, 4th = 1.2601, 5th = 0.8597 and 6th = 0.5854, with the same brakes and their corresponding combinations of simultaneous action of two of them, the reverse speed ratio being 4.7753 and whose combination of brakes is r and a, instead of r and b of the previous example; with all of which, and naturally with the proper sizes of cogwheels, brake discs, pistons, bearings and shafts, a version of speed gear is obtained for industrial vehicles or vehicles with high characteristics or performance: high exceedable maximum grade or declivity and high maximum speed, a conventional hydraulic torque converter being incorporated at the input of this version of speed gear. This gear would have some maximum speeds of $n_a$, $n_B$, $n_A$, $n_b$ and $n_C$ which would not exceed the value $0.52\omega_e$, the maximum speeds of $n_r$ and $\omega_e^!$ being $1.72\omega_e$ and $1.004\omega_e$, respectively, and thus it could be applied with heat engines of medium or high turning speed.

SPEED GEAR FOR PASSENGER VEHICLE ACCORDING TO FIG. 6

Number of teeth: F = 37, $F_s$ = 22, $N_C$ = 29, $n_C$ = 30, $N_B$ = 26, $n_B$ = 33, $N_A$ = 22, $n_A$ = 37, F' = 33, $F_s^!$ = 26, $N_r$ = 38, $n_r$ = 21, $N_a$ = 27, $n_a$ = 32, $N_b$ = 25 and $n_b$ = 34.

Its kinematic function table is:

| Speed | Pistons in action | | | | | | Transmission ratio ($\omega_e/\omega_s$) |
|---|---|---|---|---|---|---|---|
| | A | B | C | a | b | r | |
| $1^a$ | x | | | x | | | 3.6260 |
| $2^a$ | | x | | x | | | 2.2500 |
| $3^a$ | | | x | x | | | 1.4671 |
| $4^a$ | | | x | | x | | 1.0188 |
| Reverse speed | x | | | | | x | -3.8000 |

In this example the shift from one speed to the next requires the substitution of a single brake, of the two operating.

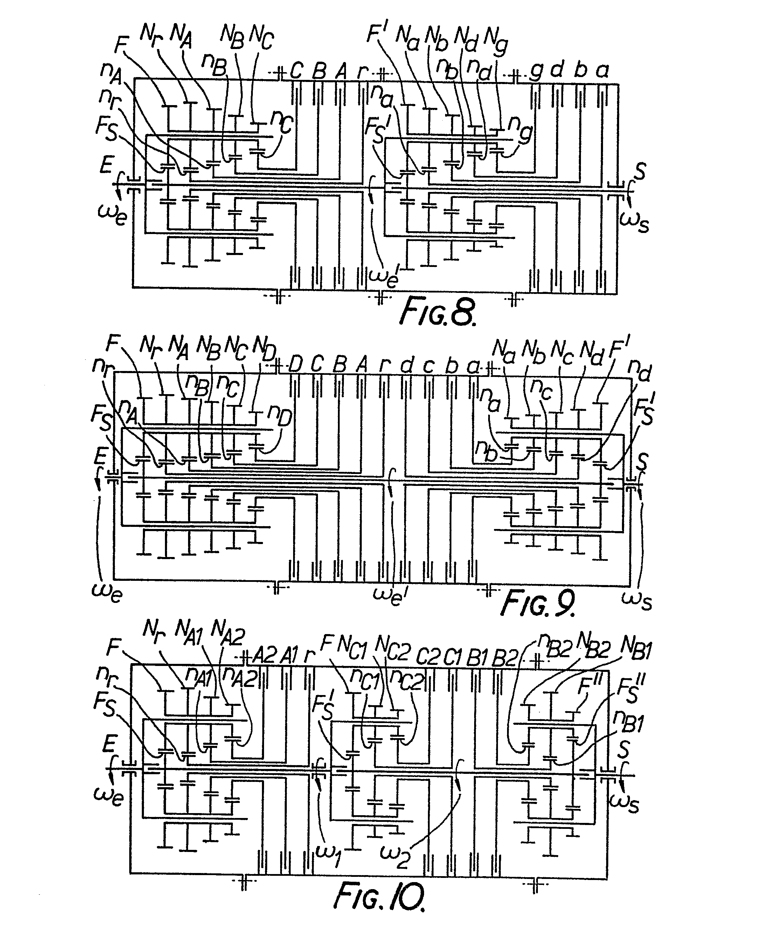

SPEED GEAR FOR PASSENGER VEHICLE ACCORDING TO FIG. 7

This gear comprises two modules of Fig. 1. Just as in the preceding case, the change of speed requires substitution of a single brake. The number of teeth are: $F = 34$, $F_s = 25$, $N_r = 39$, $n_r = 20$, $N_A = 30$, $n_A = 29$, $N_B = 28$, $n_B = 31$, $N_C = 26$ and $n_C = 33$ for the first module, and $F' = 38$, $F_s' = 21$, $N_a = 29$, $n_a = 30$, $N_b = 27$, $n_b = 32$, $N_d = 25$ and $n_d = 34$ in the second module. The corresponding table is:

| Speed | Pistons in action | | | | | | | Ratio ($\omega_e/\omega_s$) |
|---|---|---|---|---|---|---|---|---|
| | A | B | C | r | a | b | d | |
| $1^a$ | x | | | | x | | | 3.6448 |
| $2^a$ | | x | | | x | | | 2.2679 |
| $3^a$ | | | x | | x | | | 1.5794 |
| $4^a$ | | | x | | | x | | 1.2031 |
| $5^a$ | | | x | | | | x | 0.9426 |
| Reverse speed | | | | x | x | | | -3.7906 |

For initiating forward speed there will be first $\omega_A = 0$ and then $\omega_a = 0$. Reverse speed will be in the sequence $\omega_a = 0$ and then $\omega_r = 0$.

SPEED GEAR FOR PASSENGER VEHICLE ACCORDING TO FIG 8

This is also the coupling of two modules of Fig. 1, but with an extra brake and its corresponding cogwheels in the second module, in relation to the preceding example. In this case there are six speeds. The teeth are: $F = 34$, $F_s = 25$, $N_r = 39$, $N_A = 30$, $n_A = 29$, $N_B = 28$, $n_B = 31$, $N_C = 26$, $n_C = 33$, $n_r = 20$, $F' = 38$, $F'_e = 21$, $N_a = 29$, $n_a = 30$, $N_b = 27$, $n_b = 32$, $N_d = 25$, $n_d = 34$, $N_g = 24$ and $n_g = 35$, the summary of function being:

| Speed | Pistons in action | | | | | | | | Ratio $(\omega_e / \omega_s)$ |
|---|---|---|---|---|---|---|---|---|---|
| | A | B | C | r | a | b | d | g | |
| $1^a$ | x | | | | x | | | | 3.6448 |
| $2^a$ | | x | | | x | | | | 2.2679 |
| $3^a$ | | | x | | x | | | | 1.5794 |
| $4^a$ | | | x | | | x | | | 1.2031 |
| $5^a$ | | | x | | | | x | | 0.9426 |
| $6^a$ | | | x | | | | | x | 0.8403 |
| Reverse speed | | | | x | x | | | | -3.7906 |

Its first five transmission ratios are the same of the preceding example, the sixth speed having the ratio 0.8403.

The examples now for embodiments of gears for application to industrial vehicles, whose diagrams can be the same as in the case of passenger vehicles, are the following.

-32-

SPEED GEAR FOR INDUSTRIAL VEHICLE ACCORDING TO FIG. 7

If this Figure 7, which already served as an example of application to a passenger vehicle, corresponds to the following number of teeth:  $F = 38$, $F_s = 21$, $N_r = 40$, $n_r = 19$, $N_A = 35$, $n_A = 24$, $N_B = n_C = 32$, $N_C = n_B = 27$, $F' = 45$, $F'_s = 22$, $N_a = 38$, $n_a = 29$, $N_b = 36$, $n_b = 31$, $N_d = 34$, $n_d = 33$, and the condition is not established that shift from one speed to the next is made changing but a single brake of the two in operation, a realisation of NINE speeds is achieved as follows:

| Speed | Pistons in action | | | | | | | Ratio $(\omega_e/\omega_s)$ |
|---|---|---|---|---|---|---|---|---|
| | A | B | C | r | a | b | d | |
| $1^a$ | x | | | | x | | | 7.4020 |
| $2^a$ | x | | | | | x | | 5.4541 |
| $3^a$ | x | | | | | | x | 4.2145 |
| $4^a$ | | x | | | x | | | 3.3838 |
| $5^a$ | | x | | | | x | | 2.4933 |
| $6^a$ | | x | | | | | x | 1.9266 |
| $7^a$ | | | x | | x | | | 1.5573 |
| $8^a$ | | | x | | | x | | 1.1475 |
| $9^a$ | | | x | | | | x | 0.8867 |
| Reverse speed | | | | x | | | x | -7.2249 |
| Reverse speed | | | | x | | x | | -9.3499 |

As can be seen, the shift from 3rd to 4th and from 6th to 7th, and vice versa, require substitution of the two brakes.

For better judgment of the performance it should be noted that the maximum rotation speeds produced, in absolute values, are of the following order:  $A = 0.79\,\omega_e$,

0125365

-33-

$\omega_B = 0.44\omega_e$, $\omega_C = 0.60\omega_e$, $\omega_r = 1.50\omega_e$, $\omega_a = 0.32\omega_e$, $\omega_b = 0.15\omega_e$, $\omega_d = 0.13\omega_e$, and that the speed step (in %) from the first to the sixth (that is, transmission ratio coefficients) are 35.7, 29.4, 24.5, 35.7, 29.4, 23.7, 35.7 and 29.4%, in addition to the existence of two reverse speed ratios, which could be called short and long, for the values 9.3499 and 7.2249, respectively.

## SPEED GEAR FOR INDUSTRIAL VEHICLE ACCORDING TO FIG. 8

For this figure, also employed as example for a passenger vehicle, if the teeth number: $F = 35$, $F_s = 26$, $N_r = 37$, $n_r = 24$, $N_A = 32$, $n_A = 29$, $N_B = 30$, $n_B = 31$, $N_C = 27$, $n_C = 34$, $F' = 39$, $F'_s = 22$, $N_a = n_b = 32$, $n_a = N_b = 29$, $N_d = 26$, $n_d = 35$, $N_g = 24$ and $n_g = 37$, a version of SIX speeds is obtained, the following table showing the summary of function:

| Speed | Pistons in action | | | | | | | | Ratio $(\omega_e / \omega_s)$ |
|---|---|---|---|---|---|---|---|---|---|
| | A | B | C | r | a | b | d | g | |
| $1^a$ | x | | | | x | | | | 7.4958 |
| $2^a$ | | x | | | x | | | | 4.2164 |
| $3^a$ | | | x | | x | | | | 2.3717 |
| $4^a$ | | | x | | | x | | | 1.5046 |
| $5^a$ | | | x | | | | x | | 1.0376 |
| $6^a$ | | | x | | | | | x | 0.8301 |
| Reverse | | | | x | x | | | | -8.2472 |

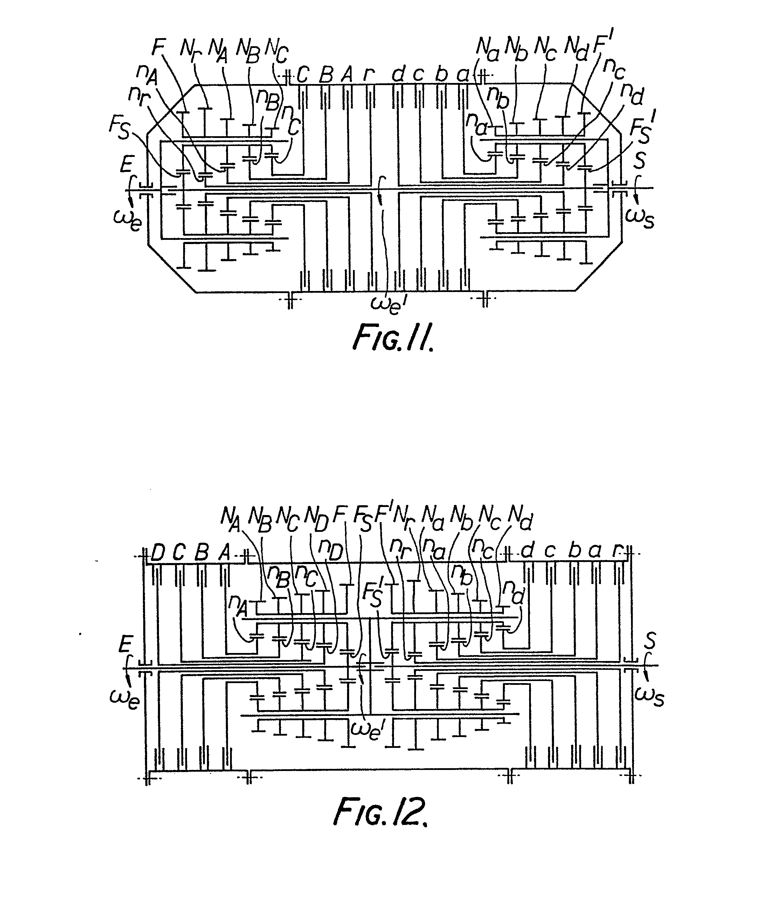

## SPEED GEAR FOR INDUSTRIAL VEHICLE ACCORDING TO FIG. 9

This example corresponds to a version of SEVEN speeds. It is formed by a module of Fig. 1 and another of Fig. 2. Its summary is:

| Speed | Pistons in action | | | | | | | | | Ratio $(\omega_e/\omega_s)$ |
|---|---|---|---|---|---|---|---|---|---|---|
| | A | B | C | D | r | a | b | c | d | |
| $1^a$ | x | | | | | x | | | | 8.4023 |
| $2^a$ | | x | | | | x | | | | 4.8069 |
| $3^a$ | | | x | | | x | | | | 2.7845 |
| $4^a$ | | | | x | | x | | | | 1.8652 |
| $5^a$ | | | | x | | | x | | | 1.2534 |
| $6^a$ | | | | x | | | | x | | 0.8838 |
| $7^a$ | | | | x | | | | | x | 0.6699 |
| Reverse speed | | | | | x | x | | | | -9.4545 |

the number of teeth of its wheels being: $F = 46$, $F_s = 21$, $N_r = 48$, $N_A = 43$, $N_B = 41$, $N_C = 38$, $N_D = 35$, $n_r = 19$, $n_A = 24$, $n_B = 26$, $n_C = 29$, $n_D = 32$, $F'_s = 21$, $N_a = 29$, $N_b = 33$, $N_c = 36$, $N_d = 38$, $n_a = 38$, $n_b = 34$, $n_c = 31$, $n_d = 29$, $F' = 46$. Its speed step in % from 1st to 7th is: 74.8, 72.6, 49.3, 48.8, 41.8 and 31.9%.

## SPEED GEAR FOR INDUSTRIAL VEHICLE ACCORDING TO FIG. 10

This example is formed by two modules of Fig. 1 and one module of Fig. 2. It has EIGHT forward speeds and it can be said that this is the 2 x 2 x 2 version, requiring the application of THREE brakes acting simultaneously for the connection of each speed. The number of teeth are: $F = 46$, $F_s = 21$, $N_r = 49$, $N_{A1} = 43$, $N_{A2} = 42$, $n_r = 18$, $n_{A1} = 24$, $n_{A2} = 25$, $F' = 46$, $F'_s = 21$, $N_{C1} = 41$, $N_{C2} = 32$, $n_{C1} = 26$, $n_{C2} = 35$, $F'' = 22$, $F''_s = 45$, $N_{B1} = 48$, $N_{B2} = 31$, $n_{B1} = 19$, $n_{B2} = 36$. The characteristics of function are:

0125365

| Speed | Pistons in action | | | | | | | Ratio $(\omega_e/\omega_s)$ | Step (%) |
|---|---|---|---|---|---|---|---|---|---|
| | A1 | A2 | r | C1 | C2 | B1 | B2 | | |
| $1^a$ | x | | | x | | x | | 9.3120 | |
| | | | | | | | | | 36.5 |
| $2^a$ | | x | | x | | x | | 6.8216 | |
| | | | | | | | | | 36.7 |
| $3^a$ | x | | | x | | | x | 4.9911 | |
| | | | | | | | | | 36.5 |
| $4^a$ | | x | | x | | | x | 3.6562 | |
| | | | | | | | | | 40.8 |
| $5^a$ | x | | | | x | x | | 2.5957 | |
| | | | | | | | | | 36.5 |
| $6^a$ | | x | | | x | x | | 1.9015 | |
| | | | | | | | | | 36.7 |
| $7^a$ | x | | | x | | | x | 1.3912 | |
| | | | | | | | | | 36.5 |
| $8^a$ | | x | | x | | | x | 1.0192 | |
| Reverse speed | | x | x | x | | | | -10.6114 | - |

The maximum rotation speeds of the intermediate shafts $\omega_1$ and $\omega_2$, in absolute values, are $0.304\omega_e$ and $0.424\omega_e$, respectively. The following are the fundamental kinematic equations which have served for the realisation of this example:

$$301\omega_1 + 67\omega_e = 368\omega_{A1} \; ; \; 441\omega_1 + 134\omega_e = 575\omega_{A2} \; ;$$

$$343\omega_1 - 67\omega_e = 276\omega_r \; ; \; 465\omega_2 - 201\omega_s = 264\omega_{B2}$$

$$861\omega_2 + 335\omega_1 = 1196\omega_{C1} ; \; 336\omega_2 + 469\omega_1 = 805\omega_{C2}$$

$$1080\omega_2 - 871\omega_s = 209\omega_{B1}$$

## SPEED GEAR FOR INDUSTRIAL VEHICLE ACCORDING TO FIG. 11

This example represents a 3 x 4 version and thus has TWELVE transmission ratios. The connection of each speed requires the simultaneous action of two brakes. The example adheres to: $F = 45$, $N_r = 47$, $N_A = 41$, $N_C = 39$,

$n_r = 20$, $n_A = 26$, $n_B = 27$, $n_C = 28$, $N_B = 40$, $F_s = 22$, $N_a = 25$, $N_b = 32$, $N_c = 37$, $N_d = 41$, $n_a = 42$, $n_b = 35$, $n_c = 30$, $n_d = 26$, $F' = 46$, $F'_s = 21$, and thus the specifications of the known general formulas (I), (II) and (III) give:

$$451\omega'_e + 134\omega_e = 585\omega_A \; ; \; 175\omega_e + 469\omega_s = 464\omega_a$$

$$176\omega'_e + 67\omega_e = 243\omega_B \; ; \; 336\omega'_e + 469\omega_s = 805\omega_b$$

$$143\omega'_e + 67\omega_e = 210\omega_C \; ; \; 259\omega'_e + 201\omega_s = 460\omega_c$$

$$517\omega'_e - 67\omega_e = 450\omega_r \; ; \; 861\omega'_e + 335\omega_s = 1196\omega_d$$

from which it is then possible to deduce the table of kinematic values and the brake combinations for each speed, as shown below, including the speed values of each element as of certain interest.

| Speed | $\dfrac{\omega_A}{\omega_e}$ | $\dfrac{\omega_B}{\omega_e}$ | $\dfrac{\omega_C}{\omega_e}$ | $\dfrac{\omega_r}{\omega_e}$ | $\dfrac{\omega_a}{\omega_e}$ | $\dfrac{\omega_b}{\omega_e}$ | $\dfrac{\omega_c}{\omega_e}$ | $\dfrac{\omega_d}{\omega_e}$ | $\dfrac{\omega'_e}{\omega_e}$ | Ratio $\omega_e/\omega_s$ | Step (%) |
|---|---|---|---|---|---|---|---|---|---|---|---|
| $1^a$ | 0 | 0.061 | 0.117 | -0.499 | 0 | -0.059 | -0.119 | -0.183 | -0.297 | 9.0200 | |
| | | | | | | | | | | | 28.1 |
| $2^a$ | -0.064 | 0 | 0.060 | -0.586 | 0 | -0.076 | -0.152 | -0.234 | -0.381 | 7.0400 | |
| | | | | | | | | | | | 23.1 |
| $3^a$ | -0.132 | -0.064 | 0 | -0.687 | 0 | -0.094 | -0.187 | -0.288 | -0.469 | 5.7200 | |
| | | | | | | | | | | | 21.8 |
| $4^a$ | 0 | 0.061 | 0.117 | -0.490 | 0.074 | 0 | -0.074 | -0.154 | -0.297 | 4.6979 | |
| | | | | | | | | | | | 28.1 |
| $5^a$ | -0.064 | 0 | 0.060 | -0.586 | 0.095 | 0 | -0.095 | -0.198 | -0.381 | 3.6667 | |
| | | | | | | | | | | | 23.1 |
| $6^a$ | -0.132 | -0.064 | 0 | -0.687 | 0.117 | 0 | -0.117 | -0.243 | -0.469 | 2.9792 | |
| | | | | | | | | | | | 14.1 |
| $7^a$ | 0 | 0.061 | 0.117 | -0.490 | 0.198 | 0.099 | 0 | -0.107 | -0.297 | 2.6120 | |
| | | | | | | | | | | | 28.1 |
| $8^a$ | -0.064 | 0 | 0.060 | -0.576 | 0.254 | 0.127 | 0 | -0.137 | -0.381 | 2.0386 | |
| | | | | | | | | | | | 23.1 |
| $9^a$ | -0.132 | -0.064 | 0 | -0.627 | 0.312 | 0.156 | 0 | -0.168 | -0.469 | 1.6564 | |
| | | | | | | | | | | | 26.5 |
| $10^a$ | 0 | 0.061 | 0.117 | -0.490 | 0.475 | 0.321 | 0.166 | 0 | -0.298 | 1.3095 | |
| | | | | | | | | | | | 28.1 |
| $11^a$ | -0.064 | 0 | 0.060 | -0.532 | 0.609 | 0.411 | 0.213 | 0 | -0.321 | 1.0221 | |
| | | | | | | | | | | | 23.1 |
| $12^a$ | -0.132 | -0.184 | 0 | -0.687 | 0.750 | 0.506 | 0.262 | 0 | -0.469 | 0.8304 | |
| Rev. | 0.329 | 0.370 | 0.407 | 0 | -0.032 | 0 | 0.032 | 0.067 | 0.130 | -10.7708 | |
| | | | | | | | | | | | 79.9 |
| Rev. | 0.329 | 0.370 | 0.407 | 0 | -0.086 | -0.043 | 0 | 0.047 | 0.130 | -5.9884 | |

In starting, and for the possibility of non-simultaneous action of the two discs, the following is the procedure:

For forward movement first brake $\underline{A}$ acts and then brake $\underline{a}$, the latter being immobilised from such a small speed as $\omega_a = -0.081\,\omega_e$.

For short reverse speed, for example, brake $\underline{r}$ acts and then brake $\underline{b}$, with immobilisation from an initial speed of $\omega_b = 0.054\,\omega_e$.

## SPEED GEAR FOR INDUSTRIAL VEHICLE ACCORDING TO FIG. 12

This has SIXTEEN speeds. It can be defined as a 4 x 4 version as it is formed by two modules of Figs. 1 and 2, each of which has four transmission ratios. This example has been realised with the values: $N_A = 22$, $N_B = 24$, $N_C = 26$, $N_D = 28$, $F = F' = 46$, $F_s = F'_s = 21$, $n_A = 45$, $n_B = 43$, $n_C = 41$, $n_D = 39$, $N_r = 49$, $N_a = 42$, $N_b = 38$, $N_c = 33$, $N_d = 26$, $n_r = 18$, $n_a = 25$, $n_b = 29$, $n_c = 34$, $n_d = 41$, with which the fundamental equations are:

$$77\,\omega_e + 268\,\omega'_e = 345\,\omega_A \quad ; \quad 441\,\omega_s + 134\,\omega'_e = 575\,\omega_a$$

$$252\,\omega_e + 737\,\omega'_e = 989\,\omega_B \quad ; \quad 399\,\omega_s + 268\,\omega'_e = 667\,\omega_b$$

$$273\,\omega_e + 670\,\omega'_e = 943\,\omega_C \quad ; \quad 693\,\omega_s + 871\,\omega'_e = 1564\,\omega_c$$

$$98\,\omega_e + 201\,\omega'_e = 299\,\omega_D \quad ; \quad 273\,\omega_s + 670\,\omega'_e = 943\,\omega_d$$

$$343\,\omega_s - 67\,\omega'_e = 276\,\omega_r; \quad \text{with the kinematic function as}$$

follows:

| Speed | $\dfrac{\omega_A}{\omega_e}$ | $\dfrac{\omega_B}{\omega_e}$ | $\dfrac{\omega_C}{\omega_e}$ | $\dfrac{\omega_D}{\omega_e}$ | $\dfrac{\omega_c}{\omega_e}$ | $\dfrac{\omega_b}{\omega_e}$ | $\dfrac{\omega_c}{\omega_e}$ | $\dfrac{\omega_d}{\omega_e}$ | $\dfrac{\omega_r}{\omega_e}$ | $\omega'_e/\omega'_e$ | Ratio $\omega_e/\omega_s$ | Step (%) |
|---|---|---|---|---|---|---|---|---|---|---|---|---|
| 1[a] | 0 | 0.044 | 0.085 | 0.135 | 0 | −0.063 | −0.121 | −0.179 | 0.178 | −0.29 | 11.45 | 19.0 |
| 2[a] | −0.042 | 0 | 0.047 | 0.098 | 0 | −0.075 | −0.144 | −0.213 | 0.212 | −0.34 | 9.63 | 19.2 |
| 3[a] | −0.093 | −0.049 | 0 | 0.054 | 0 | −0.090 | −0.172 | −0.254 | 0.253 | −0.41 | 8.08 | 19.7 |
| 4[a] | −0.156 | −0.109 | −0.057 | 0 | 0 | −0.107 | −0.206 | −0.304 | 0.303 | −0.49 | 6.75 | 30.3 |
| 5[a] | 0 | 0.041 | 0.085 | 0.135 | 0.081 | 0 | −0.075 | −0.148 | 0.310 | −0.19 | 5.18 | 19.0 |
| 6[a] | −0.042 | 0 | 0.047 | 0.098 | 0.097 | 0 | −0.089 | −0.176 | 0.368 | −0.34 | 4.35 | 19.2 |
| 7[a] | −0.093 | −0.049 | 0 | 0.054 | 0.115 | 0 | −0.106 | −0.210 | 0.439 | −0.41 | 3.65 | 19.7 |
| 8[a] | −0.156 | −0.109 | −0.057 | 0 | 0.138 | 0 | −0.126 | −0.252 | 0.525 | −0.49 | 3.05 | 10.3 |
| 9[a] | 0 | −0.041 | 0.035 | 0.135 | 0.210 | 0.101 | 0 | −0.100 | 0.519 | −0.29 | 2.77 | 19.0 |
| 10[a] | −0.047 | 0 | 0.047 | 0.098 | 0.250 | 0.120 | 0 | −0.119 | 0.617 | −0.34 | 2.33 | 19.2 |
| 11[a] | −0.093 | −0.049 | 0 | 0.054 | 0.298 | 0.143 | 0 | −0.141 | 0.735 | −0.41 | 1.95 | 19.7 |
| 12[a] | −0.156 | −0.109 | −0.057 | 0 | 0.356 | 0.171 | 0 | −0.169 | 0.755 | −0.49 | 1.63 | 15.1 |
| 13[a] | 0 | 0.041 | 0.085 | 0.135 | 0.474 | 0.306 | 0.125 | 0 | 0.946 | −0.29 | 1.42 | 19.0 |
| 14[a] | −0.082 | 0 | 0.043 | 0.098 | 0.564 | 0.365 | 0.181 | 0 | 1.126 | −0.34 | 1.19 | 19.2 |
| 15[a] | −0.073 | −0.049 | 0 | 0.054 | 0.672 | 0.435 | 0.216 | 0 | 1.342 | −0.41 | 1.00 | 19.7 |
| 16[a] | −0.156 | −0.109 | −0.057 | 0 | 0.804 | 0.520 | 0.259 | 0 | 1.605 | −0.49 | 0.84 | |
| Rev. | −0.093 | −0.049 | 0 | 0.054 | −0.156 | −0.211 | −0.262 | −0.312 | 0 | −0.41 | −12.56 | 19.7 |
| Rev. | −0.150 | −0.109 | −0.057 | 0 | −0.187 | −0.233 | −0.314 | −0.374 | 0 | −0.49 | −10.50 | |

This concludes the description of examples in relation to their kinematic aspect, with no other object than to clarify possible doubts and establish the advantages -mentioned earlier, in addition to demonstrating the many versions which can be achieved. As to the dynamic aspect, it is clear that the gear teeth will present no problem, since their respective calculations will be those realized today with consideration of the force to be transmitted by each pair of teeth in contact (greater number than the unit since the driving power is channeled through the mesh between the pairs $N_i - n_i$ and through the pairs $F - F_s$ and $F' - F'_s$). With regard to the multi-disc brakes, their proper size and proportion is perfectly possible along with the correct number of discs for each brake, for the purpose of transmission of the convenient brake torque for immobilizing them during the time of connection of their respective speed. For this example and when considering the start of the vehicle, that is, for quantifying the action of the corresponding brake during the period of the initiation of movement (at which stage the action of the conventional clutch is superfluous), it is to be noted that the value of the rotation speed of the vehicle's heat engine ($\omega_e$) is, for example, $\omega_e = 1400$ rpm (approximate maximum torque rate of a diesel engine having a maximum turn rate of about 2000 rpm); upon establishing that for $\omega_s = 0$ this is $\omega_A = 0$ (because brake A has acted) and $\omega_a = -0.067\omega_e$, we have $\omega_a = 0.067 \times 1400 = 93.8$ rpm. Consequently, the period of slippage of the discs which brake $\underline{a}$ during the start in question is that used in immobilizing them from an initial speed of a value of 93.8 rpm. In view of this result, the perfect feasibility of the system is readily understood. For the initiation of reverse speed, $\omega_s = 0$, $\omega_c = 0$ (for the short reverse, that is of higher transmission ratio) and $\omega_r = -0.099\omega_e$, with which brake $\underline{r}$ will perform the function of the present clutch, with braking of its discs from the initial

speed of value $\omega_r$ = 0.099 x 1400 = 138.6 rpm.  To this point description has been made of examples of speed gears; the following, and concluding with the diagrammed figures of the drawings, explains the:

SPEED MULTIPLIER ACCORDING TO FIG. 13

This figure is formed by a gear module of Fig. 1, without brakes and with a fixed brake (that of wheel $\underline{n}$) and another module of Fig. 2.  For the values $F = F' = 38$, $F_s = F'_s = 21$, $N = N_N = 28$, $N_R = 27$, $n_R = 32$, $N_M = 29$, $n_M = 30$ and $n = n_N = 31$ we have the equations:

$$294\,\omega'_e + 295\,\omega_e = 0 \quad ; \quad 567\,\omega'_e + 649\,\omega_s = 1216\,\omega_R$$

$$294\,\omega'_e + 295\,\omega_s = 589\,\omega_N \quad ; \quad 203\,\omega'_e + 177\,\omega_s = 380\,\omega_M$$

with which the following table of kinematic values is obtained:

| $\dfrac{\omega_R}{\omega_e}$ | $\dfrac{\omega_N}{\omega_e}$ | $\dfrac{\omega_M}{\omega_e}$ | $\dfrac{\omega'_e}{\omega_e}$ | Ratio $(\omega_e/\omega_s)$ |
|---|---|---|---|---|
| 0 | -0.0618 | -0.1277 | -1.0034 | 1.14074 |
| 0.0658 | 0 | -0.0702 | -1.0034 | 1.00000 |
| 0.1463 | 0.0755 | 0 | -1.0034 | 0.86897 |

With these results the previously cited definition or title "speed multiplier" is justified, for if this mechanical unit is installed in a certain vehicle so that it is coupled between the heat engine and the speed gear, upon connecting brake N the transmission ratio is retained in the value corresponding to the speed to which the speed gear in question is geared.  If brake $\underline{R}$ acts, the transmission ratio of the speed gear will be multiplied by the factor 1.14074 (that is, it will be availed of a reduced speed); if on the other hand brake M acts, there will be a multiplied speed resulting from the product of 0.86897 and the transmission ratio of the connected speed of the speed gear. Definitely and if, for example, the gear has six forward speeds, incorporation of the group here described will permit 3 x 6 = 18 forward speeds (naturally a necessary condition, to avoid their overlap, will be a step value exceeding 1.15). It is obvious that the cited speed multiplier can have the most suitable or convenient number of transmission ratios, that is, fewer than three, three or more than three.

All the examples described are formed by modules of Fig. 1 and Fig. 2, which correspond to the exterior gear versions; however, combinations of modules as indicated in Figs. 1' and 2', or the use of some of them, can result in versions of speed gears of characteristics similar to those already described.

Fig. 14 - This is a gearbox of three transmission ratios.

| $\omega_A/\omega_e$ | $\omega_B/\omega_e$ | $\omega_C/\omega_e$ | $\omega_e/\omega_e'$ | $\omega_{e,}/\omega_s$ (if $\frac{\omega_e}{s}=0.880$) | $\omega_{e,}/\omega_s$ (if $\frac{\omega_e}{s}=0.822$) |
|---|---|---|---|---|---|
| 0 | 0.5186 | 0.6837 | 1.1560 | 1.000 | 0.950 |
| −1.0775 | 0 | 0.3428 | 1.3896 | 1.202 | 1.142 |
| −2.1613 | −0.5217 | 0 | 1.7440 | 1.509 | 1.433 |

The equations are:

$$2401\omega_e' - 2077\omega_e = 324\omega_A \; ; \; 931\omega_e' - 670\omega_e = 261\omega_B$$

$$1519\omega_e' - 871\omega_e = 648\omega_C$$

and the teeth numbers are:

$F = 18; \quad F_s = 49; \quad N_A = 49; \quad N_B = 38; \quad N_C = 31; \quad n_A = 18; \quad n_B = 29 \; yn_C = 36$

This already-described gearbox also incorporates a mechanism for blocking the epicyclic gear of engine torque distribution. Given the high values of engine torque in its input shaft E, this realisation possibly demands dry brakes, for which coupling can be made of the separating panels and leaktight elements as described for Fig. 22. It is evident that either decrease or increase of the number of transmission ratios is possible. The substantial advantage of the selection and connection of each transmission ratio by the braking action of some discs justifies the possibility of making these shifts without need of stopping the vehicle.

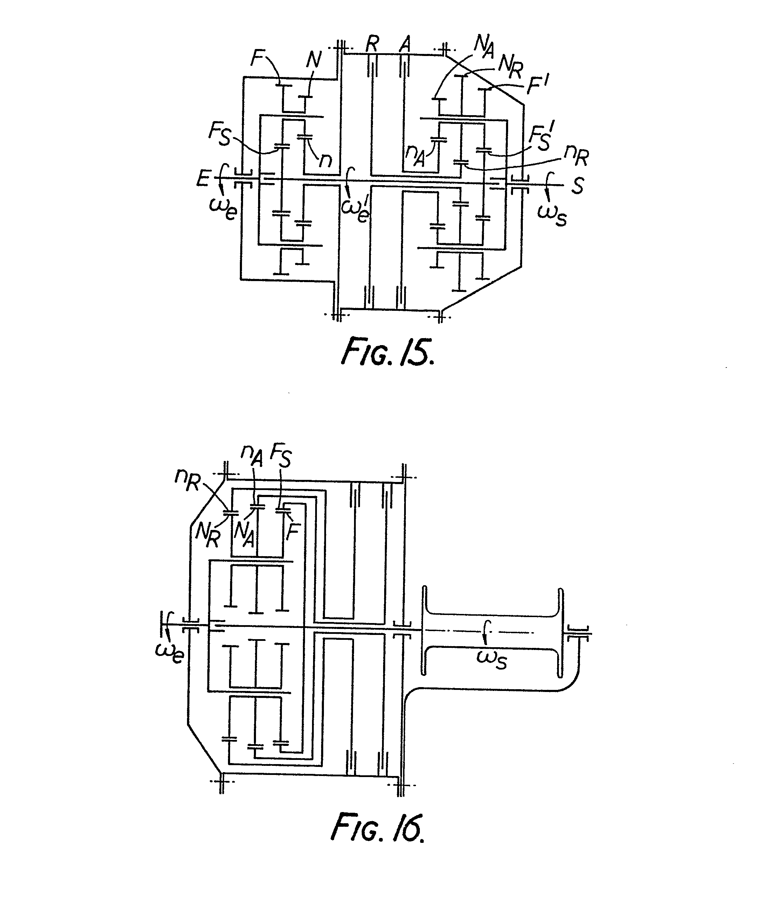

Fig. 15 - This reverses the direction of turn. Its transmission ratio values are 1 and N-1 for the following example:

$F = F' = 28$ ; $F_S = F'_S = 31$; $N = N_A = 23$ ; $n = n_A = 36$, $N_R = 36$; $n_R = 23$

$$713\,\omega'_e + 295\,\omega_e = 0 \quad ; \quad 713\,\omega'_e + 295\,\omega_s = 1008\,\omega_A \;;$$
$$279\,\omega'_e - 118\,\omega_s = 161\,\omega_R$$

| $\omega_A/\omega_e$ | $\omega_R/\omega_e$ | $\omega_e/\omega_s$ |
|---|---|---|
| 0 | -1.4499 | 1 |
| -0.5790 | 0 | -1.0222 |

Fig. 16 - An example corresponding to a winch, making use of a module of Fig. 1'. For the values $n_R = 69$; $n_A = 71$; $F_S = 70$, $N_R = 29$; $N_A = 31$; $F = 30$, the result is:

$$217\,_s - 4\,_e = 213\,_A \; ; \; 203\,_s + 4\,_e = 207\,_R$$

| $\omega_A/\omega_e$ | $\omega_R/\omega_e$ | $\omega_e/\omega_s$ |
|---|---|---|
| 0 | -0.001212 | 54.25 |
| -0.038854 | 0 | -50.75 |

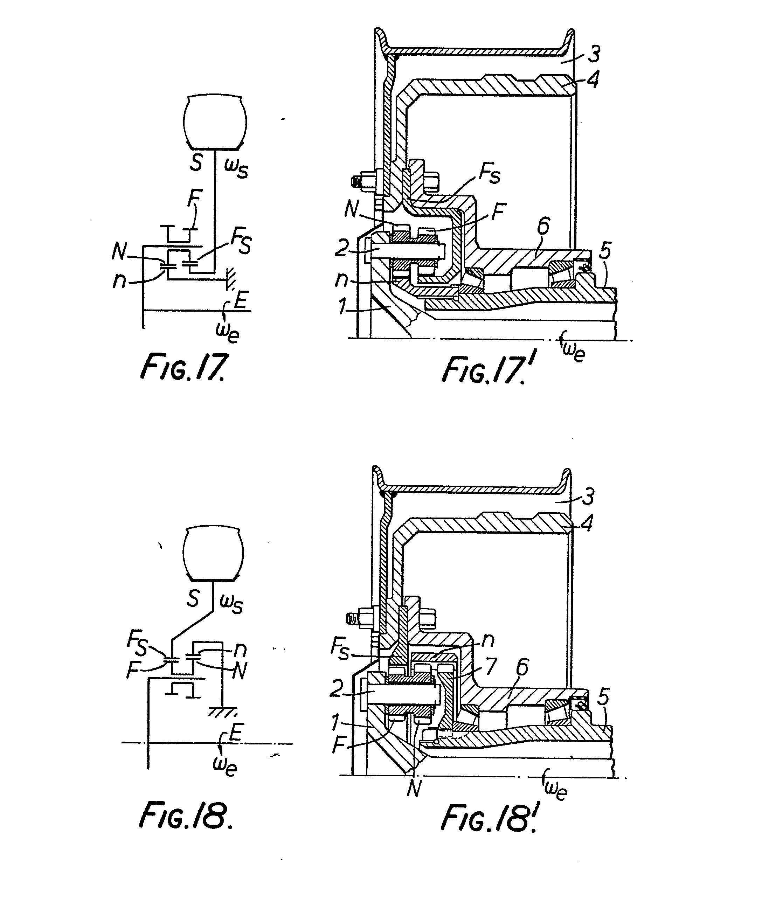

<u>Figs. 17, 17', 18 and 18'</u> − The example described corresponds to the version of Figs. 18 and 18'.

With $\mu = \dfrac{F}{F_s} \times \dfrac{n}{N}$ y $\dfrac{\omega_e}{\omega_s} = \dfrac{1}{1-\mu}$ the following combinations are available:

| F | $F_s$ | n | N | $\omega_e / \omega_s$ |
|---|---|---|---|---|
| 18 | 56 | 64 | 26 | 4.7895 |
| 18 | 56 | 63 | 25 | 5.2632 |
| 18 | 56 | 62 | 24 | 5.8947 |
| 18 | 56 | 61 | 23 | 6.7789 |
| 18 | 56 | 60 | 22 | 8.1053 |

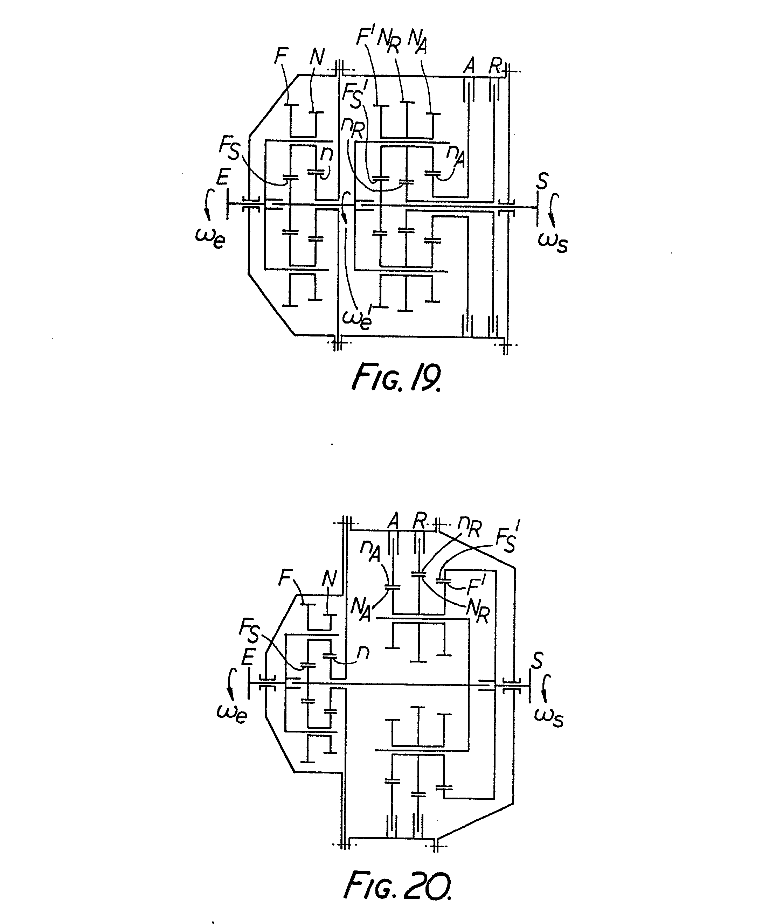

<u>Fig. 19</u> − Marine reducer and inverter-reducer. The example is centered on two embodiments:

Embodiment I      = F = 37;   $F_s$ = 30;   N = 28;   n = 39;
        F' = 37;   $F'_s$ = 30;   $N_R$ = 42;   $n_R$ = 25;
        $N_A$ = 33 y $n_A$ = 34

Embodiment II      = F = F' = 37;   $F_s$ = $F'_s$ = 30;   N = 32;
        n = 35;   $N_R$ = 38;   $n_R$ = 29;   $N_A$ = 36;
        $n_A$ = 31

with which the kinematic equations are:

$$69.300\,\omega_s - 13.467\,\omega_e = 88.060\,\omega_A \quad \text{and}$$
$$70.560\,\omega_s + 13.467\,\omega_e = 51.800\,\omega_R \quad \text{for embodiment I and}$$
$$207.360\,\omega_s - 4.489\,\omega_e = 220.224\,\omega_A$$
$$218.880\,\omega_s + 4.489\,\omega_e = 206.016\,\omega_R \quad \text{for embodiment II}$$

and the corresponding tables are:

| Execution I | | | Execution II | | |
|---|---|---|---|---|---|
| $\omega_A/\omega_e$ | $\omega_R/\omega_e$ | $\omega_e/\omega_s$ | $\omega_A/\omega_e$ | $\omega_R/\omega_e$ | $\omega_e/\omega_s$ |
| 0 | 0.5247 | 5.1459 | 0 | 0.0448 | 46.1929 |
| -0.3031 | 0 | -5.2395 | -0.0397 | 0 | -48.7592 |

Fig. 20 - Another version of marine reducer.

$F = 37$; $\quad F_s = 23$; $\quad N = 26$; $\quad n = 34$, $\quad F' = 27$; $\quad F'_s = 102$;
$n_A = 99$; $\quad n_R = 106$; $\quad N_A = 24$; $\quad N_R = 31$,

$$299\omega'_e + 330\,\omega_e = 0; \quad 816\,\omega_s + 75\omega'_e = 891\,\omega_A$$
$$527\,\omega_s - 50\omega'_e = 477\,\omega_R$$

| $\omega_A/\omega_e$ | $\omega_R/\omega_e$ | $\omega_e/\omega_s$ |
|---|---|---|
| 0 | 0.22776 | 9.85794 |
| -0.18880 | 0 | -9.54988 |

Fig. 21 - Engageable speed reducer. The example has been designed for a high transmission ratio. The number of teeth are:

$n_A = n = 102$; $\quad N_A = N = 22$; $\quad F_s = F'_s = 101$; $\quad F = F' = 21$

From the principal equations:

$$1.111\omega'_e - 40\,\omega_e = 1.071\,\omega_A \ ; \quad 1.111\,\omega_s - 40\omega'_e = 0$$

the following is deduced:

For $\omega_A = 0$, then $\omega_e/\omega_s = \dfrac{1.111^2}{40} = \underline{771.45}$, and for

$\omega_s = 0$, then $\omega_A = -0.03735\omega_e$,

the first value 771.45 being the transmission ratio and the second the initial speed of the disc or discs which must brake A to perform the function of a conventional clutch.

Although the entire preceding description and examples have been made to give the best explanation possible of the invention, it must be understood that they can be amended or modified without deviating from the spirit or scope of the invention, as fully covered by this patent of invention application herein described and according to the accompanying claims.

What is claimed:

1. Transmissions for vehicles and their gearing and of application in industry in general, which in their application as speed gears are integrated by gears and brakes, the arrangement of the former being the same as in known epicyclic gears but characterized in that:

a) each of their planets, of which there are equals $p$, is multiple; that is, it is constituted by an $n$ number of cogwheels which have different pitch diameter values and are coaxial and turn-linked, the physical shaft of the member commonly known as the planetary member mount (a member incorporating the multi-planet shafts $p$) being called principal shaft 2,

b) they have no crown gears, and

c) of the cogwheels $n$, each of which meshes with a like wheel $p$ of the multiple planets and which are known as central suns or planets, there is one, the principal wheel turn-linked and coaxial with a physical shaft, which is designated principal shaft 1, the remaining $n - 1$ wheels being positioned coaxially with this shaft and with freedom of turn among themselves and with the principal shaft 1, known as auxiliary wheels; the brakes, which can be of known type such as multi-disc, ring-piston and hydraulic-drive, are characterized in that there are as many brakes as auxiliary wheels, that is $n - 1$, and in that each when applied prevents a certain auxiliary wheel from turning, for which the appropriate mechanical connections are provided which coaxially turn-link each auxiliary wheel with each turning disc or discs of each brake, with which and owing to the independent action of each brake as many transmission ratios are obtained (quotients between turning speeds) between the principal shafts 1 and 2 as there are brakes, or $n - 1$; this is to say that a speed

0125365

gear is available of $n - 1$ speeds and whose input and output shafts are coaxial or aligned, this entire unit of gears and brakes and corresponding shafts being designated a basic module of exterior mesh, comprising a total of $p \times n + n$ cogwheels ($p \times n$ wheels of the multiple planets and sun wheels $n$, the principal and auxiliary) and n - 1 brakes, the appropriate wheels meshing exteriorly.

2. Transmissions for vehicles and their gearing and of application in industry in general, which in their application as speed gears according to the previous claim are characterized in that upon connecting in series two or more exterior-mesh basic modules, that is turn-linking and aligning the main shaft of one module with the main shaft of the next other, and defining the combinations for the simultaneous function of the grouped brakes and basic modules, and in such manner that a single brake acts for each basic module, a speed gear is provided of the appropriate number of transmission ratios or speeds between the end and principal shafts of the grouped basic modules which constitute the input and output shafts of the speed gear in question.

3. Transmissions for vehicles and their gearing and of application in industry in general, which in their application as speed gears are integrated by gears and brakes, characterized in that the arrangement between the former and the brake connections with the cogwheels differs from that described in claim 1 in that in this version, which can be called a basic module of interior mesh, the epicyclic gears are characterized because rather than suns they have crown gears each of which meshes with the like cogwheel $p$ of the wheels $n$ of each multiple planet, $n - 1$ of these crowns being those which are turn-linked and coaxial with each of the single or multiple brake discs of the $n - 1$ brakes:

in this case the crowns in question are auxiliary wheels, there being one crown, which is none of those mentioned, which is coaxial and turn-linked with a physical shaft designated as principal shaft 1 and known as the principal wheel to the crown joined thereto, all the auxiliary wheels being arranged coaxially with the principal shaft 1 and with freedom of turn with each other, with the result that with the immobilization of each auxiliary wheel upon application of the corresponding brake, n - 1 transmission ratios are provided between the principal shaft 2, which is the planetary member mount shaft, and the principal shaft 1, both aligned, which as a consequence is equivalent to a speed gear of n - 1 speeds.

4. Transmissions for vehicles and their gearing and of application in industry in general, which in their application as speed gears according to the previous claims are characterized in that upon connecting two or more basic modules of interior mesh in series, or else one or more basic modules of exterior mesh with one or more basic modules of interior mesh, and defining the combinations for the simultaneous function of as many brakes and basic modules which have been grouped, in such manner that a single brake is applied for each basic module, a speed gear is provided of the suitable number of speeds between the principal and end shafts of the grouped basic modules which constitute the input and output shafts of the speed gear in question.

5. Transmissions for vehicles and their gearing and of application in industry in general, which in their application as speed gears according to the previous claims are characterized in that they can be formed by mixed basic modules, or groups of these in series, or the latter with basic modules of exterior mesh or with basic modules of interior mesh, a mixed basic module being understood as that derived either from a basic module of exterior mesh in which one or more suns are removed and the same number of crown gears is added to mesh with the multi-planet wheels with which the removed wheels meshed, or as that derived from a basic module of interior mesh from which one or more crown gears are removed and the same number of central planets is added to respectively mesh with the same wheels of the multiple planets with which the removed crown gears meshed; in each instance the added wheels, crowns or suns are respectively connected with the corresponding brake discs for their braking by the action of the same brakes which acted to brake the corresponding removed wheels, namely suns or crowns, respectively, and in both cases it is the auxiliary wheels which are removed.

6. Transmissions for vehicles and their gearing and of application in industry in general, which in their application as speed gears according to the previous claims are characterized in that to the described basic modules forming them, whether the version of basic module of exterior mesh or that of interior mesh, addition can be made of from one (1) to $n$ crown gears or from one (1) to $n$ central planets, depending upon whether the modules are of the first or second cited types, respectively, by means of which and also incorporating from $\underline{1}$ to $\underline{n}$ multi-disc brakes, in both cases, prepared to brake each of the added cogwheels, a number of transmission ratios is provided for each module ranging between $\underline{n}$ and $\underline{2 \times n-1}$, respectively.

7. Transmissions for vehicles and their gearing and of application in industry in general, which in their application as speed gears according to the previous claims are characterized in that the said basic modules, even though corresponding preferably to embodiments of multi-planet shafts parallel to the principal shafts, must be understood in the most general sense, that is, they can be multi-planet shafts not parallel to the directions of the main shafts, in which case and as a consequence the gearteeth will be tapered, and can be grouped in the forms mentioned or else be used alone, in both cases fulfilling the requirements of speed gear versions.

8. Transmissions for vehicles and their gearing and of application in industry in general, which in their application as speed gears according to the previous claims are characterized in that they can be formed by parallel groups of basic modules of exterior, interior or mixed mesh, such grouping being understood as that obtained by activating the main shaft of one of them from the main shaft of another, without the two being turn-linked, for example through a pair of meshed wheels each of which is coaxial and turn-linked with the said main shafts, and it being further understood that even though this arrangement was first defined as a parallel grouping, such does not necessarily mean that the cited main shafts must be parallel, which will only be a particular case.

9. Transmissions for vehicles and their gearing and of application in industry in general, which in their application as speed gears according to the previous claims are characterized in that in the case of groups of basic modules of any of the described types, these can be arranged aligning the connected main shafts but so that they are not turn-linked, a certain transmission ratio existing between them.

10. Transmissions for vehicles and their gearing and of application in industry in general, which in their application as speed gears according to the previous claims are characterized in that they can be formed by groups of basic modules of any of the de-

fined types in such manner that in the case of there being more than two basic modules, some can be grouped in series and others in parallel arrangement.

11. Transmissions for vehicles and their gearing and of application in industry in general, which in their application as speed gears are characterized in that they can include known elements such as oil pumps, valves, electrovalves, etc., for their appropriate handling and/or automation.

12. Transmissions for vehicles and their gearing and of application in industry in general, according to the previous claims, characterized in that the basic modules of exterior, interior or mixed mesh, with which new speed gear versions can be defined, are also applicable for vehicle gearing such as speed multipliers, gearboxes and winches; they can also be used for defining new embodiments of speed reducers or reducers and inverters for marine applications, in which cases the value of $n$ will be that suitable for these applications.

13. Transmissions for vehicles and their gearing and of application in industry in general, according to the previous claims, characterized in that a basic module can be used, of either exterior or interior mesh and with $n = 2$, for use in vehicle reduction gears or in speed reducers or multipliers of industry in general, in which case the corresponding auxiliary wheel can always be braked by preferably mechanical means, and thus no brake is necessary.

14. Transmissions for vehicles and their gearing and of application in industry in general, according to the previous claims, characterized in that the use of one or more basic modules suitably joined in series can be applied to a speed reducer or multiplier of the appropriate transmission ratio value, even though this be very high or very low, for use in general industry and where

specifically required, corresponding or not to the engageable version depending upon whether a brake is available for the only auxiliary wheel or this is omitted with the latter being braked, respectively, thereby achieving some embodiments of less volume and weight and therefore of reduced cost, by being able to couple the adequate $p$ number of multiple planets in each basic module.

15. TRANSMISSIONS FOR VEHICLES AND THEIR GEARING AND OF APPLICATION IN INDUSTRY IN GENERAL.

0125365

1/12

FIG. 1.

FIG. 1'.

FIG. 2.

FIG. 2'.

FIG. 3.

FIG. 4.

FIG. 5.

FIG. 6.

FIG. 7.

FIG.8.

FIG.9.

FIG.10.

FIG. 11.

FIG. 12.

0125365

FIG. 13.

FIG. 14.

FIG. 15.

FIG. 16.

0125365

FIG.17.

FIG.17'.

FIG.18.

FIG.18'.

FIG. 19.

FIG. 20.

FIG. 21.

FIG. 22.

FIG.23.

FIG. 24.

## EUROPEAN SEARCH REPORT

| | DOCUMENTS CONSIDERED TO BE RELEVANT | | EP 83306493.4 | |
|---|---|---|---|---|

| Category | Citation of document with indication. where appropriate, of relevant passages | Relevant to claim | CLASSIFICATION OF THE APPLICATION (Int. Cl. ³) |
|---|---|---|---|
| X | DE - C - 117 125 (SCHULZE) <br> * Totality * | 1 | F 16 H 3/62 |
| X | DE - C - 230 848 (UHLENDORF) <br> * Totality * | 1 | |
| X | GB - A - 16 891 A.D.1900 (HEATLY, HUNT) <br> * Totality * | 1 | |
| X | GB - A - 167 413 (COTAL) <br> * Totality * | 1 | |
| X | AT - B - 136 892 (GESSNER) <br> * Totality * | 3,7 | **TECHNICAL FIELDS SEARCHED (Int. Cl. ³)** |
| X | GB - A - 1 087 465 (ENGLISH ELEC- TRIC CO.) <br> * Totality * | 5 | F 16 H 3/00 |
| X | GB - A - 11 138 A.D.1909 (HÜTTEN- BACH) <br> * Totality * | 7 | |
| X | DE - C - 403 102 (BLANC-GARIN) <br> * Totality * | 9 | |
| X | FR - A - 967 113 (BOITE AUTOMATIQUE) <br> * Page 2, right column; lines 6-15* | 11 | |

The present search report has been drawn up for all claims

| Place of search | Date of completion of the search | Examiner |
|---|---|---|
| VIENNA | 07-05-1984 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82